# EUROPEAN PATENT APPLICATION

(11) **EP 4 696 815 A1**
(43) Date of publication of application: **18.02.2026**
(21) Application number: 24807391.8
(22) Date of filing: 23.04.2024
(51) Int. Cl.: C25B 9/23, C25B 11/089, C25B 9/65, C25B 11/02, C25B 9/77, C25B 1/04, C25B 15/08

(54) **METHOD FOR MANUFACTURING ANION EXCHANGE MEMBRANE WATER ELECTROLYSIS SYSTEM**

(30) Priority: 12.05.2023 KR 20230061678
(71) Applicant: Hanwha Solutions Corporation, Jung-gu Seoul 04541 (KR); Korea Advanced Institute of Science and Technology, Daejeon 34141 (KR); Yonsei University, University-Industry Foundation(UIF)., Seoul 03722 (KR)
(72) Inventor: KIM, Yong Min, Daejeon 34128 (KR); CHUNG, Hoon Taek, Daejeon 34128 (KR); LEE, Hyunjoo, Daejeon 34141 (KR); LEE, Wonjae, Daejeon 34141 (KR); JEON, Sun Seo, Daejeon 34141 (KR); HAN, Byungchan, Seoul 03719 (KR); YUN, Hyebin, Seoul 03725 (KR); HONG, Sung Jun, Seoul 03722 (KR)
(74) Representative: Berggren Oy
(86) International application number: PCT/KR2024/005474
(87) International publication number: WO 2024/237512

(57) **Abstract**

Provided is a method of manufacturing an anion exchange membrane water electrolysis system exhibiting improved durability and efficiency, along with excellent water electrolysis performance.

## Description

### [TECHNICAL FIELD]

### Cross-reference to Related Application

The present application is based on, and claims priority from, Korean Patent Application No. 10-2023-0061678, filed on May 12, 2023, the disclosure of which is hereby incorporated by reference herein in its entirety.

The present invention relates to a method of manufacturing an anion exchange membrane water electrolysis system exhibiting improved durability and efficiency, along with excellent water electrolysis performance.

### [BACKGROUND ART]

The importance of technologies capable of environmentally friendly production of hydrogen, which is a next-generation energy source that can solve deletion of fossil fuels and environmental pollution, is being emphasized.

Accordingly, research on water electrolysis technology using an electrolysis method is being actively conducted. As the representative water electrolysis technologies, proton exchange membrane water electrolysis (PEMWE), anion exchange membrane water electrolysis (AEMWE), and alkaline water electrolysis (AWE) are known.

In alkaline water electrolysis, nickel-based oxides and cobalt-based oxides are generally used as reduction and oxidization electrocatalyst materials, and aqueous alkaline solutions such as KOH, etc. are used as electrolytes. Alkaline electrolysis has advantages of not requiring a noble metal catalyst and being able to operate at relatively low temperatures. However, there are disadvantages such as low hydrogen production rate and large design system for hydrogen production. In addition, alkaline electrolyte in a liquid state is prone to leakage, and leakage of electrolyte increases resistance to reduce current density, ultimately, leading to reduction in the water electrolysis efficiency.

Meanwhile, proton exchange membrane water electrolysis is a water electrolysis system that uses a solid electrolyte membrane such as Nafion, instead of a liquid electrolyte. Since the volume occupied by the solid electrolyte membrane is smaller than that of the liquid electrolyte, the size of the system can be reduced and high current density can be provided. However, since the system is operated in an acidic environment, it is necessary to use, as reduction and oxidization electrocatalyst materials, platinum-based catalysts such as IrO₂ and Pt, which are resistant to the strong corrosion by acid. The use of expensive platinum-based catalysts increases the cost of hydrogen production, which is the biggest limitation to commercialization of proton exchange membrane water electrolysis.

In contrast, anion exchange membrane water electrolysis is a system that utilizes the advantages of the existing systems while overcoming their disadvantages. Since it is operated in an alkaline environment, use of non-platinum-based metals as catalyst materials is possible, and a prominent energy density can be achieved with a compact system. However, non-platinum-based metal catalysts have lower catalytic activity than platinum-based metal catalysts, and thus they have the disadvantage of low water electrolysis efficiency.

Accordingly, research and development is being conducted on the development of a catalyst having excellent catalytic activity to improve water electrolysis efficiency, and an anion exchange membrane water electrolysis system. With regard to the catalyst, research is progressing toward application of the previously developed half-cell catalysts for alkaline to the anion exchange membrane system. However, the applied catalysts still have problems of low catalytic activity and deteriorated durability.

### [DETAILED DESCRIPTION OF THE INVENTION]

### [TECHNICAL PROBLEM]

To solve the above problems of the prior art, there is provided a method of manufacturing an anion exchange membrane water electrolysis system exhibiting improved durability and efficiency, along with excellent water electrolysis performance.

There is also provided an anion exchange membrane water electrolysis system manufactured by the above manufacturing method.

There is also provided an activation method capable of improving performance of the anion exchange membrane water electrolysis system.

### [TECHNICAL SOLUTION]

A method of manufacturing an anion exchange membrane water electrolysis system according to one embodiment of the present invention includes the steps of:
manufacturing a preliminary reduction electrode and an oxidization electrode, respectively;
manufacturing a preliminary membrane-electrode assembly by interposing an anion exchange membrane between the preliminary reduction electrode and the oxidization electrode; and
activating the preliminary reduction electrode by feeding an aqueous alkaline solution into the preliminary membrane-electrode assembly,
wherein the preliminary reduction electrode includes NiMo-based alloy particles in which a molar ratio of Ni and Mo is 1:1 to 6:1 and the oxidation number of Mo is 4+, 5+, or 6+, and
the activation is performed by applying a current at a current density of 25 mA/cm² to 200 mA/cm² and maintaining the same at 50°C to 60°C for 90 minutes to 360 minutes.

Further, an anion exchange membrane water electrolysis system according to another embodiment of the present invention is manufactured by the above-described method of manufacturing an anion exchange membrane water electrolysis system, and includes a reduction electrode including a particulate NiMo-based alloy catalyst; an oxidation electrode; an anion exchange membrane interposed between the reduction electrode and the oxidization electrode; and an aqueous alkaline solution, wherein the NiMo-based alloy catalyst includes Ni and Mo at a molar ratio of 6:1 to 101:1 and the oxidation number of Mo is 5+ or 6+.

A method of activating an anion exchange membrane water electrolysis system according to still another embodiment of the present invention includes the step of activating a preliminary reduction electrode by feeding an aqueous alkaline solution into a preliminary anion exchange membrane water electrolysis system including the preliminary reduction electrode, an oxidization electrode, and an anion exchange membrane interposed between the preliminary reduction electrode and the oxidization electrode, wherein the preliminary reduction electrode includes NiMo-based alloy particles in which a molar ratio of Ni and Mo is 1:1 to 6:1 and the oxidation number of Mo is 4+, 5+, or 6+, applying a current at a current density of 25 mA/cm² to 200 mA/cm², and maintaining the same at 50°C to 60°C for 90 minutes to 360 minutes.

### [ADVANTAGEOUS EFFECTS]

An anion exchange membrane water electrolysis system exhibiting improved durability and efficiency, along with excellent water electrolysis performance, may be manufactured by a manufacturing method according to the present invention.

### [BRIEF DESCRIPTION OF THE DRAWINGS]

FIG. 1A is a graph showing the adsorption energy of H₂O, MoO₂, and H₂O/MoO₂ clusters on the surface of Ni₂₄Mo₄ alloy, and FIG. 1B is a graph showing the adsorption energy according to the adsorption site of a hydrogen intermediate H*;
FIG. 2 is a schematic illustration showing a hydrogen evolution reaction mechanism of NiMo-based alloy in an alkaline environment;
FIG. 3 is a schematic illustration showing an anion exchange membrane water electrolysis system including a dual feeding-type aqueous alkaline solution circulation device according to one embodiment of the present invention;
FIG. 4 is a schematic illustration showing an anion exchange membrane water electrolysis system including a both feeding-type aqueous alkaline solution circulation device according to another embodiment of the present invention;
FIG. 5 is a schematic illustration showing an anion exchange membrane water electrolysis system including an anode feeding-type aqueous alkaline solution circulation device according to still another embodiment of the present invention;
FIGS. 6A to 6D are graphs showing the results of BET analysis for NiMo-based alloy particles of Preparation Examples 1, 2, 3, and 4, respectively;
FIG. 7 is a graph showing the results of linear sweep voltammetry (LSV) to evaluate changes in the activity for the hydrogen evolution reaction according to a molar ratio of Ni and Mo in NiMo-based alloy;
FIG. 8 is a graph showing the results of X-ray photoelectron spectroscopy (XPS) to analyze the initial oxidation number of Mo in NiMo-based alloys of Preparation Examples 1 to 4;
FIG. 9 is a graph showing the results of XPS to analyze the change in the oxidation number of Mo in Ni₃Mo alloy before and after activation;
FIG. 10 is a graph showing the results of observing the amount of current change according to voltage control in an anion exchange membrane water electrolysis system activated by a method of increasing and decreasing a voltage to be applied;
FIG. 11 is a graph showing the results of observing the amount of current change according to voltage control in an anion exchange membrane water electrolysis system activated by a method of applying a current at a predetermined current density and maintaining the same for a predetermined time;
FIG. 12 is a graph showing the results of evaluating polarization for the anion exchange membrane water electrolysis system activated under current density conditions of 25 mA/cm², 50 mA/cm², 100 mA/cm², and 200 mA/cm², respectively;
FIG. 13 is a graph showing the results of evaluating durability for the anion exchange membrane water electrolysis system activated under current density conditions of 25 mA/cm², 50 mA/cm², 100 mA/cm², and 200 mA/cm², respectively;
FIG. 14 is a diagram showing a state of Mo according to pH, disclosed in a reference "Anatolyevich, Pavel. "The Revised Pourbaix Diagram for Molybdenum." HMo 2.10: 3.";
FIG. 15 is a graph showing the results of X-ray fluorescence spectrometry (XRF) to analyze the remaining amount of Mo in the anion exchange membrane water electrolysis system activated under current density conditions of 25 mA/cm², 50 mA/cm², 100 mA/cm², and 200 mA/cm², respectively;
FIG. 16 is a graph showing the results of evaluating the effect of activation time on the performance development of NiMo-based alloy;
FIG. 17 is a graph showing the results of evaluating polarization of the anion exchange membrane water electrolysis system according to the aqueous alkaline solution circulation method; and
FIG. 18 is a graph showing the results of evaluating the durability of the anion exchange membrane water electrolysis system.

### [DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. In the present description, the term "include", "equip", or "have" is only used for explaining characteristics taken effect, numbers, steps, components, or combinations thereof, and do not exclude the existence or the possibility of addition of one or more different characteristics, numbers, steps, components or combinations thereof.

Further, in the present invention, when a layer or an element is mentioned to be formed "on" or "above" layers or elements, it means that each layer or element is directly formed on the layers or elements, or other layers or elements may be additionally formed between the layers, subjects, or substrates.

Further, in the present invention, "reduction electrode", "membrane-electrode assembly", and "anion exchange membrane water electrolysis system" refer to reduction electrode, membrane-electrode assembly, and anion exchange membrane water electrolysis system after activation, respectively, and "preliminary reduction electrode", "preliminary membrane-electrode assembly", and "preliminary anion exchange membrane water electrolysis system" refer to reduction electrode, membrane-electrode assembly, and anion exchange membrane water electrolysis system before activation, respectively.

Further, "NiMo-based alloy particles" refers to alloy particles before activation, which are used in manufacturing the preliminary reduction electrode, and "NiMo-based alloy catalyst" or "particulate NiMo-based alloy catalyst" refers to alloy particles after activation.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a method of manufacturing an anion exchange membrane water electrolysis system according to embodiments of the present invention, an anion exchange membrane water electrolysis system manufactured according to the method, and an activation method capable of improving performance of the anion exchange membrane water electrolysis system will be described in detail.

A method of manufacturing an anion exchange membrane water electrolysis system according to one embodiment of the present invention includes
the step of manufacturing a preliminary reduction electrode and an oxidization electrode, respectively (step 1);
the step of manufacturing a preliminary membrane-electrode assembly by interposing an anion exchange membrane between the preliminary reduction electrode and the oxidization electrode (step 2); and
the step of activating the preliminary reduction electrode by feeding an aqueous alkaline solution into the preliminary membrane-electrode assembly (step 3),
wherein the preliminary reduction electrode includes NiMo-based alloy particles, in which the NiMo-based alloy particles include Ni and Mo at a molar ratio of 1:1 to 6:1 and the oxidation number of Mo is 4+, 5+, or 6+, and
the activation is performed by applying a current at a current density of 25 mA/cm² to 200 mA/cm² and maintaining the same at 50°C to 60°C for 90 minutes to 360 minutes.

As a result of activating the preliminary reduction electrode, a reduction electrode is manufactured. The reduction electrode includes a particulate NiMo-based alloy catalyst derived from the NiMo-based alloy particles, in which the NiMo-based alloy catalyst includes Ni and Mo at a molar ratio of 6:1 to 101:1, and the oxidation number of Mo is 5+ or 6+.

The present inventors have found a problem that in the case of NiMo-based alloy catalysts, previously developed as non-platinum catalysts for anion exchange membrane water electrolysis, Mo is lost in an alkaline environment when operating an anion exchange membrane water electrolysis system, and as a result, water electrolysis performance is deteriorated. Through identification of a performance development mechanism of the NiMo-based alloy, they found that when the molar ratio and the oxidation number of the NiMo alloy, the activation method of the water electrolysis system, and furthermore, the electrolyte feeding method are controlled and optimized, the manufactured anion exchange membrane water electrolysis system may exhibit excellent water electrolysis performance at the level of a platinum catalyst, even though it includes a non-platinum catalyst, and the anion exchange membrane water electrolysis system has improved durability and efficiency to have less performance degradation even after long-term operation, thereby completing the present invention.

Specifically, NiMo-based alloy particles including Ni and Mo at a variety of molar ratios were prepared, a preliminary reduction electrode including the same and a preliminary anion exchange membrane water electrolysis system were manufactured and activated, and cell performance was examined. As a result, it was found that a significant loss of Mo in the NiMo-based alloy occurs in an alkaline environment when the water electrolysis system is operated, and as a result, there are changes in the molar ratio of Ni and Mo in the alloy and the oxidation number of Mo.

Thereafter, the cause of Mo loss was mechanistically identified through thermodynamic calculations. Specifically, the energy was calculated when Mo was lost one by one from the Ni₂₄Mo₈ alloy, and all of them proceeded in the direction of stabilization (see Table 3 in Experimental Example 3 below). In addition, through computational chemistry, it was confirmed that the NiMo-based alloy is stable as all Mo present on the surface is lost in an alkaline environment.

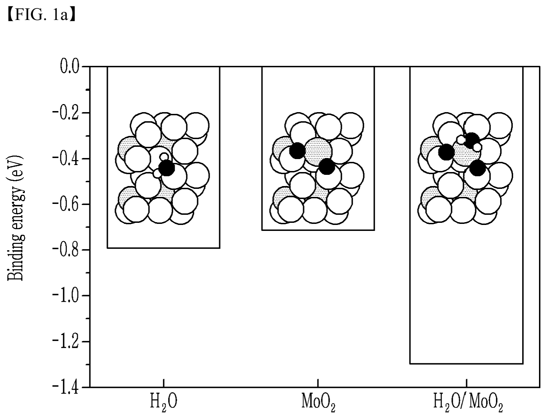

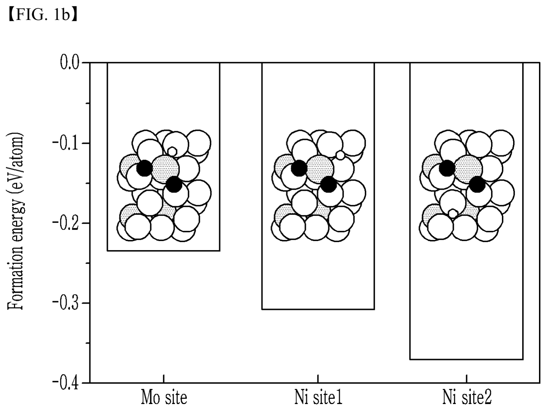

FIG. 1A is a graph showing the adsorption energy of H₂O, MoO₂, and H₂O/MoO₂ clusters on the surface of Ni₂₄Mo₄ alloy, and FIG. 1B is a graph showing the adsorption energy according to the adsorption site of a hydrogen intermediate H*.

The calculation of adsorption energy in FIG. 1A confirmed that Mo lost during activation of the water electrolysis system is adsorbed with water and exists in the form of H₂O/MoO₂ clusters, and the results of calculating the adsorption energy according to the adsorption site in FIG. 1B confirmed that an intermediate product, hydrogen is more stabilized when adsorbed onto the Ni site rather than the Mo site. From these results, it is possible to predict the mechanism by which H₂O/MoO₂ clusters are adsorbed onto the Ni surface, and after water electrolysis, hydrogen moves to the Ni surface to generate hydrogen.

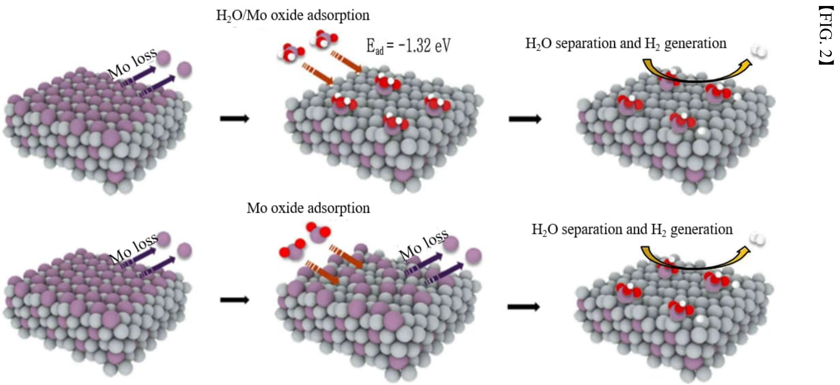

FIG. 2 is a schematic illustration showing a hydrogen evolution reaction mechanism of NiMo-based alloy, specifically, Ni₃Mo alloy in an alkaline environment. FIG. 2 is only an example for illustrating the present invention, and the present invention is not limited thereto.

Referring to FIG. 2, the hydrogen evolution reaction of the NiMo-based alloy in an alkaline environment consists of: (1) loss of all Mo from the surface of NiMo-based alloy, (2) formation of Mo oxide from the lost Mo, (3) re-adsorption in the form of H₂O/Mo oxide onto bare Ni surface, (4) dissociation reaction of water and Ni site adsorption of hydrogen intermediate H* (dual active site), and (5) H₂ evolution mechanism by Heyrovsky or Tafel reaction.

Therefore, the structure of the NiMo-based alloy catalyst, which is stable and highly active in an alkaline environment, has a structure in which the catalyst surface consists of Ni, Mo is dissolved to become MoO₂, which forms H₂O/Mo oxide clusters with H₂O, and are adsorbed onto the Ni surface. Further, at this time, the molar ratio of Ni and Mo in the alloy catalyst is 6:1 to 101:1, and the oxidation number of Mo is 5+ or 6+.

When the above molar ratio requirement is satisfied, only the surface Mo on the NiMo-based alloy is selectively dissolved, and the resulting Mo oxide forms a cluster with water and may be sufficiently adsorbed onto the Ni surface. When only Mo exists on the surface of the alloy catalyst as usual, it is difficult to control the molar ratio of Ni and Mo and the oxidation number of Mo to satisfy the above requirements.

Based on the performance development mechanism of NiMo-based alloy identified above, the present invention controls and optimizes the molar ratio of Ni and Mo and the oxidation number of Mo in the NiMo-based alloy, the activation method of the water electrolysis system, and furthermore, the electrolyte feeding method, thereby realizing a stable and highly active NiMo-based alloy catalyst structure.

Accordingly, the reduction electrode in the anion exchange membrane water electrolysis system which is manufactured by the method of manufacturing the anion exchange membrane water electrolysis system according to the present invention includes the NiMo-based alloy catalyst having the stable and highly active structure.

Specifically, the anion exchange membrane water electrolysis system which is manufactured by the method of manufacturing the anion exchange membrane water electrolysis system according to the present invention includes the reduction electrode including the particulate NiMo-based alloy catalyst; an oxidization electrode; an anion exchange membrane interposed between the reduction electrode and the oxidization electrode; and an aqueous alkaline solution, wherein the NiMo-based alloy catalyst includes Ni and Mo at a molar ratio of 6:1 to 101:1, and the oxidation number of Mo is 5+ or 6+.

In the present invention, the molar ratio of Ni and Mo in the NiMo-based alloy catalyst may be determined through XRF analysis. The detailed analysis method and conditions are as described in Experimental Example below.

Further, the oxidation number of Mo in the NiMo-based alloy catalyst may be determined through XPS analysis. The detailed analysis method and conditions are as described in Experimental Example below.

Further, the NiMo-based alloy catalyst includes a Ni layer on the surface.

The Ni layer is formed due to loss of Mo from the surface of NiMo-based alloy particles during the activation process.

Meanwhile, the loss rate of each element from the NiMo-based alloy before and after activation may be confirmed through XRF analysis of the alloy. The detailed analysis method and conditions are as described in Experimental Example below.

Further, the NiMo-based alloy catalyst is prepared from the NiMo-based alloy particles, and the NiMo-based alloy particles may be prepared by a powder method using a coprecipitation reaction. Therefore, the NiMo-based alloy catalyst has a particle form (powder) and has a relatively small average particle diameter and a large specific surface area, as compared to NiMo-based alloy prepared by traditional methods such as electroplating or deposition, etc.

Further, the NiMo-based alloy catalyst is a porous particle with a plurality of pores within the particle.

Further, when an electrode is manufactured traditionally using an alloy catalyst with a nano-level average particle size, a catalyst layer is formed on the electrode substrate through electroplating or deposition, and thus the specific surface area of the manufactured electrode is not large. In contrast, in the present invention, a slurry for forming the preliminary reduction electrode is prepared by dispersing the particulate alloy in a solvent, and then applied to a release film, dried, and separated to prepare a catalyst layer, which is as it is used as the reduction electrode. Accordingly, the manufactured reduction electrode has a larger specific surface area than those traditionally manufactured, and as a result, it may exhibit excellent catalytic activity.

Further, the NiMo-based alloy catalyst may be included in the reduction electrode at a high loading amount of 1.0 mg/cm² or more.

Meanwhile, the anion exchange membrane water electrolysis system according to the present invention includes a membrane-electrode assembly (MEA) as a unit cell, which consists of the reduction electrode (cathode, negative electrode) including the above-mentioned particulate NiMo-based alloy catalyst, an oxidization electrode (anode, positive electrode), and an anion exchange membrane interposed between the reduction electrode and the oxidization electrode.

The anion exchange membrane water electrolysis system may include a plurality of membrane-electrode assemblies, and the number of membrane-electrode assemblies may be appropriately determined depending on the performance required for the water electrolysis system.

The plurality of membrane-electrode assemblies are connected and stacked together to form a stack.

Accordingly, the anion exchange membrane water electrolysis system includes the plurality of membrane-electrode assemblies, includes a stack that electrolyzes an aqueous alkaline solution to generate hydrogen and oxygen, and optionally, may further include an aqueous alkaline solution circulation device which supplies an aqueous alkaline solution to the stack, a generated gas discharge device for discharging oxygen and hydrogen generated in the stack, and a power supply device for applying a voltage and a current to the stack and controlling the same.

In the membrane-electrode assembly, a hydrogen evolution reaction (HER) occurs by the reduction catalyst at the reduction electrode, and as a result, hydrogen (H₂) and hydroxide ion (OH⁻) are generated. At this time, the above-mentioned particulate NiMo-based alloy catalyst is included as the reduction catalyst.

Commonly, electrodes in a water electrolysis system include a catalyst layer containing a catalyst and an electrode substrate for supporting the catalyst layer. However, the reduction electrode in the present invention includes no electrode substrate and consists of only the catalyst layer including the NiMo-based alloy catalyst.

Meanwhile, at the oxidization electrode, an oxygen evolution reaction (OER) occurs by an oxidation catalyst, and hydroxide ions generated at the reduction electrode and diffused through the anion exchange membrane are oxidized to produce water and oxygen.

The oxidation catalyst may be one or more selected from the group consisting of Ni, NiCoFe, Ir, and NiFe-layered double hydroxide (LDH).

The oxidization electrode may further include an electrode substrate for supporting the catalyst layer, along with the catalyst layer including the oxidation catalyst. The electrode substrate is a conductive porous material.

The oxidization electrode may be manufactured according to a common method. For example, the oxidization electrode may be manufactured by a manufacturing method including the steps of applying a slurry for forming the oxidation electrode onto a release film, the slurry containing the oxidation catalyst, a binder, and a solvent, drying the slurry, and then separating the slurry from the release film, or by a manufacturing method including the step of applying, plating, or depositing the oxidation catalyst on an electrode substrate.

Further, the anion exchange membrane serves to move OH⁻ ions from the reduction electrode to the oxidization electrode. As the anion exchange membrane, any may be used without particular limitation, as long as it is commonly used in anion exchange membrane water electrolysis systems, such as trimethyl ammonium functionalized polystyrenes, etc. Those commercially available may be used, and in this case, may be exemplified by Sustainion^{™} X37-50 grade RT anion exchange membrane, manufactured by Sustainion.

Further, the membrane-electrode assembly may optionally further include a gasket that seals and clamps the edges of the membrane-electrode assembly, along with the oxidization electrode, reduction electrode, and anion exchange membrane.

A plurality of the membrane-electrode assemblies having the above structure are connected in series and stacked to form a stack.

Further, in the anion exchange membrane water electrolysis system, the stack may further include one or more of a porous transport layer, and a separator or bipolar plate, along with the membrane-electrode assembly.

The porous transport layer is located at the electrode side that is not in contact with the anion exchange membrane in the membrane-electrode assembly, and serves to conduct electricity, to move the aqueous alkaline solution to the electrode, and to discharge the generated gas to the outside. The porous transport layer may be located on either the reduction electrode or the oxidization electrode, or on both of them. A nickel foam may be used as the porous transport layer for the reduction electrode, which is located at the side of the reduction electrode. Further, carbon paper may be used as the porous transport layer for the oxidization electrode, which is located at the side of the oxidization electrode.

Further, the separator is located at both sides of the membrane-electrode assembly and serves to support and connect two neighboring membrane-electrode assemblies in series.

Further, since the separator is a metal plate such as Ni, etc., it may conduct electricity applied from the power supply. In addition, a flow path is formed in the separator to move the aqueous alkaline solution fed from the aqueous alkaline solution circulation device to the porous transport layer. In addition, the separator may serve to discharge the generated gas to the outside and to transfer the heat generated from the reaction.

Further, the anion exchange membrane water electrolysis system according to the present invention may further include an aqueous alkaline solution circulation device for supplying the aqueous alkaline solution to the stack and discharging the same.

The aqueous alkaline solution may include one or more alkali metal hydroxides such as potassium hydroxide and sodium hydroxide, etc. More specifically, it may include the alkali metal hydroxide at a concentration of 0.1 M to 1 M. More specifically, the aqueous alkaline solution may be an aqueous potassium hydroxide solution with a concentration of 0.1 M to 1 M.

The aqueous alkaline solution circulation device specifically includes a tank for storing the aqueous alkaline solution, a temperature control device for controlling the temperature by supplying heat to the water electrolysis system, and a flow control device such as a pump for maintaining the constant flow rate of the aqueous alkaline solution by controlling the flow rate.

Further, one or more aqueous alkaline solution circulation devices may be included in the water electrolysis system.

The aqueous alkaline solution circulation device may be divided into a both feeding method, an anode feeding method, and a dual feeding method depending on the feeding method of the aqueous alkaline solution. Specifically, the both feeding method is a method of feeding the aqueous alkaline solution from a single aqueous alkaline solution circulation device to both the oxidization electrode and the reduction electrode, wherein a single aqueous alkaline solution circulation device is included in the anion exchange membrane water electrolysis system. The both feeding-type alkaline solution circulation device is connected to both the oxidization electrode and the reduction electrode, and supplies the aqueous alkaline solution to both the oxidization electrode and the reduction electrode. Further, the anode feeding method is a method of feeding the aqueous alkaline solution to the oxidization electrode, and in this case, a single aqueous alkaline solution circulation device is also included in the water electrolysis system. The anode feeding-type aqueous alkaline solution circulation device is connected to the oxidization electrode, and supplies the aqueous alkaline solution to the oxidization electrode. In contrast, the dual feeding method is a method of feeding the aqueous alkaline solution to the oxidization electrode and the reduction electrode from aqueous alkaline solution circulation devices which are respectively provided in the oxidization electrode and the reduction electrode, and the dual feeding-type aqueous alkaline solution circulation device consists of an aqueous alkaline solution circulation device for the oxidization electrode and an aqueous alkaline solution circulation device for the reduction electrode, which are connected to the oxidization electrode and the reduction electrode, respectively.

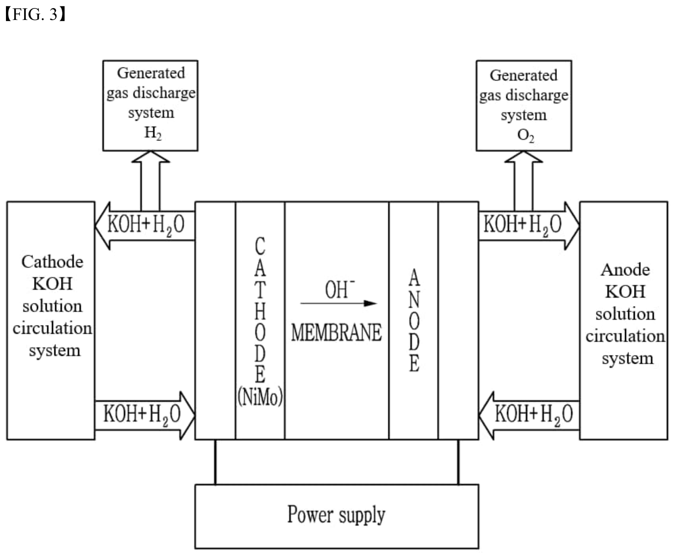

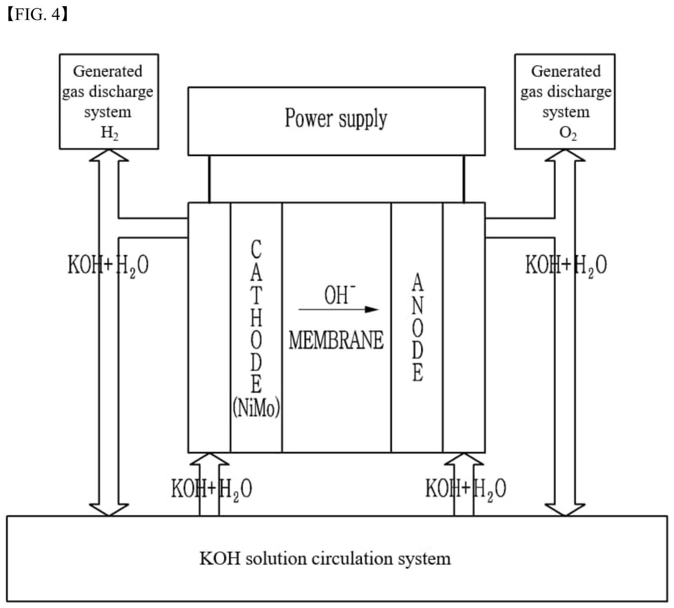

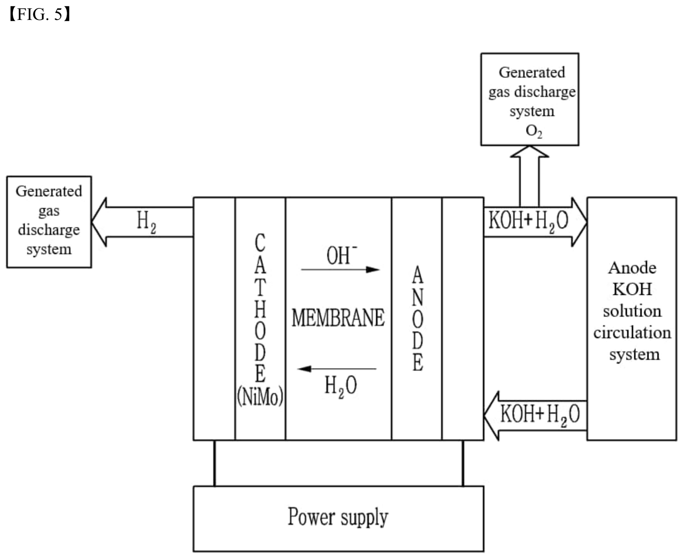

FIG. 3 is a schematic illustration showing the anion exchange membrane water electrolysis system including the dual feeding-type aqueous alkaline solution circulation device according to one embodiment of the present invention, FIG. 4 is a schematic illustration showing the anion exchange membrane water electrolysis system including the both feeding-type aqueous alkaline solution circulation device according to another embodiment of the present invention, and FIG. 5 is a schematic illustration showing the anion exchange membrane water electrolysis system including the anode feeding-type aqueous alkaline solution circulation device according to still another embodiment of the present invention. FIGS. 3 to 5 are only examples for illustrating the present invention, and the present invention is not limited thereto.

Meanwhile, the aqueous alkaline solution circulation method in the anion exchange membrane water electrolysis system affects the amount of Mo loss and the performance, particularly, durability of the anion exchange membrane water electrolysis system.

Specifically, in the both feeding method, Mo dissolution, which occurs when the aqueous alkaline solution comes into direct contact with NiMo alloy particles, and Mo dissolution, which is negatively ionized and moves to the reduction electrode, occur at the same time. In contrast, in the anode feeding method, NiMo alloy particles do not come into direct contact with the aqueous alkaline solution. Therefore, the anode feeding method shows a lower Mo loss rate than the both feeding method.

In addition, in terms of the performance of the water electrolysis system, rather than the both feeding method of feeding the aqueous alkaline solution to both the oxidization electrode and the reduction electrode by a single aqueous alkaline solution circulation device, the dual feeding method of feeding the aqueous alkaline solution to the oxidization electrode and the reduction electrode by respective two aqueous alkaline solution circulation devices may produce hydrogen at a lower voltage.

Further, the anion exchange membrane water electrolysis system according to the present invention may further include a generated gas discharge device and a power supply device along with the above-described stack and aqueous alkaline solution circulation device.

In addition, the generated gas discharge device is connected to the outlet of the aqueous alkaline solution circulation device such that the gas generated inside the water electrolysis system may be mixed with the aqueous alkaline solution to be discharged or may be discharged independently. In addition, the generated gas discharge device may remove gas at normal pressure (1 ± 0.1) and may pressurize gas by controlling the flow rate.

The generated gas discharge device may include a generated gas discharge system for the oxidization electrode (or a generated gas discharge unit for the oxidization electrode) for discharging oxygen generated at the oxidization electrode of the anion exchange membrane water electrolysis system, and a generated gas discharge system for the reduction electrode (or a generated gas discharge unit for the reduction electrode) for discharging hydrogen generated at the reduction electrode.

Further, the power supply outputs the voltage required for electrolysis to the stack of the anion exchange membrane water electrolysis system, specifically, the oxidization electrode and the reduction electrode, and plays a role in controlling the current and voltage in the system, such as consuming and removing the residual voltage in the stack, etc.

Accordingly, when the aqueous alkaline solution is fed from the alkaline electrolyte circulation device to the anion exchange membrane, and a direct current voltage is applied from the power supply to the oxidization electrode and reduction electrode, hydroxide ions (OH⁻) which is a decomposition product of the aqueous alkaline solution in the anion exchange membrane are oxidized by the oxidation catalyst on the surface of the oxidation electrode to generate oxygen, water, and electrons. The electrons move to the reduction electrode along the external conductor, and then the electrons and water react with the catalyst on the surface of the reduction electrode to generate hydrogen and hydroxide ions (OH⁻). Oxygen generated in the oxidization electrode and hydrogen generated in the reduction electrode are discharged out of the anion exchange membrane water electrolysis system through the generated gas discharge system for the oxidization electrode and the generated gas discharge system for the reduction electrode, respectively.

The anion exchange membrane water electrolysis system having the above structure according to the present invention is manufactured through the circulation and activation process of the aqueous alkaline solution, after manufacturing the preliminary membrane-electrode assembly including the preliminary reduction electrode, the oxidization electrode, and the anion exchange membrane interposed between the preliminary reduction electrode and the oxidization electrode. During the activation process, the molar ratio of Ni and Mo and the oxidation number of Mo in the NiMo-based alloy particles at the preliminary reduction electrode change through the above-described mechanism.

As described above, the method of manufacturing the anion exchange membrane water electrolysis system specifically includes the step of manufacturing the preliminary reduction electrode and the oxidization electrode, respectively (step 1); the step of manufacturing the preliminary membrane-electrode assembly by interposing the anion exchange membrane between the preliminary reduction electrode and the oxidization electrode (step 2); and the step of activating the preliminary reduction electrode by feeding the aqueous alkaline solution into the preliminary membrane-electrode assembly (step 3), wherein the preliminary reduction electrode includes NiMo-based alloy particles, in which the NiMo-based alloy particles include Ni and Mo at a molar ratio of 1:1 to 6:1 and the oxidation number of Mo is 4+, 5+, or 6+, and the activation is performed by applying a current at a current density of 25 mA/cm² to 200 mA/cm² and maintaining the same at 50°C to 60°C for 90 minutes to 360 minutes.

As explained for each step below, the step 1 is a step of manufacturing the preliminary reduction electrode and the oxidization electrode, respectively.

The preliminary reduction electrode may be manufactured by a manufacturing method including the step of applying a slurry for forming the preliminary reduction electrode onto a release film, the slurry containing the NiMo-based alloy particles, a binder, and a solvent, drying the slurry, and then separating the slurry from the release film.

The NiMo-based alloy particles included in the preliminary reduction electrode specifically include Ni and Mo at a molar ratio of 1:1 to 6:1, wherein the oxidation number of Mo is 4+, 5+, or 6+.

More specifically, the NiMo-based alloy particles may include Ni₆Mo, Ni₄Mo, Ni₃Mo or NiMo, etc., and any one thereof or a mixture of two or more thereof may be used. Much more specifically, the NiMo-based alloy particles may be Ni₃Mo alloy in which Ni and Mo are included at a molar ratio of 3:1, and the oxidation number of Mo is 4+, 5+, or 6+.

The above-described NiMo-based alloy particles may be produced by a powder method, specifically, a preparation method including the steps of co-precipitating a Ni precursor and a Mo precursor under alkaline conditions and then heat-treating the resulting product.

As the Ni precursor, carbonate, nitrate, sulfate, acetate, hydroxide, chloride, or hydrate containing Ni may be used. Specific examples may include nickel(II) chloride hexahydrate (NiCl₂·6H₂O), etc. Further, as the Mo precursor, carbonate, nitrate, sulfate, acetate, hydroxide, or chloride containing Mo may be used. Specific examples may include MoCl₅, etc.

The mixing ratio of the Ni precursor and the Mo precursor may be appropriately determined depending on the molar ratio of the elements in the alloy to be prepared.

Further, the coprecipitation reaction of the Ni precursor and the Mo precursor is performed under alkaline conditions. For this purpose, one or more basic materials such as sodium hydroxide (NaOH), sodium carbonate (Na₂CO₃), lithium hydroxide (LiOH), or potassium hydroxide (KOH), etc. may be introduced. The basic material may be introduced in an amount to maintain an appropriate pH range for coprecipitation reaction to occur, specifically, at pH of 11 to 12.

Further, the basic material may be added in a solution phase of being dissolved in water.

Further, the coprecipitation reaction of the Ni precursor and the Mo precursor may be performed in a solvent. At this time, ultrapure water (DI water), etc. may be used as the solvent.

Specifically, a first solution is prepared by mixing the Ni precursor and the Mo precursor, and a second solution of the basic material is prepared by dissolving the basic material in water. Then, water is placed in a separate reactor, and the first solution and the second solution are introduced thereto to allow a coprecipitation reaction. After the coprecipitation reaction of the Ni precursor and the Mo precursor, a reaction product is generated in the form of a precipitate.

The resulting reaction product is separated and then heat-treated at 300°C to 500°C, or 350°C to 450°C under a mixed gas atmosphere of hydrogen and inert gas.

The reaction product is reduced by the heat treatment. In addition, the degree of alloy and the size of alloy particles may be adjusted by controlling the heat treatment temperature. In the present invention, NiMo-based alloy particles satisfying the above-mentioned molar ratio requirement and oxidation number requirement, and furthermore, the particle size requirement, may be prepared by performing heat treatment under the above-described temperature conditions.

Further, during the heat treatment, hydrogen may be included in an amount of 10% by volume to 25% by volume, based on the total volume of the mixed gas. Further, nitrogen, argon (Ar), etc. may be used as the inert gas. More specifically, the heat treatment may be performed in an H₂/N₂ atmosphere containing 10% by volume of hydrogen, based on the total volume of the mixed gas of hydrogen and nitrogen.

When prepared using the above-described preparation method, the alloy is obtained in a particle form, and has a relatively small average particle diameter and a wide specific surface area, as compared to NiMo-based alloy prepared by traditional methods such as electroplating or atomic deposition, etc.

Specifically, the NiMo-based alloy particles have a BET specific surface area of 30 m²/g to 100 m²/g, more specifically 35 m²/g to 70 m²/g.

In the present invention, the BET specific surface area of the NiMo-based alloy particles may be measured using a Micromeritics Tristar II 3020 device according to the Brunauer-Emmett-Teller (BET) method, and the detailed measurement method and conditions will be described in Experimental Example below.

Further, the NiMo-based alloy particles are porous particles with a plurality of pores.

Specifically, the NiMo-based alloy particles have an average pore size of 5 nm to 20 nm, more specifically, 9 nm to 16 nm, and a pore volume within the alloy particles is 0.1 cm³/g to 0.5 cm³/g, more specifically, 0.12 cm³/g to 0.2 cm³/g.

Meanwhile, the average pore size and pore volume of the NiMo-based alloy particles may be calculated from the amount of adsorbed nitrogen gas measured according to the BET method, and the detailed measurement method and conditions will be described in Experimental Example below.

Generally, NiMo-based alloy has a structure in which Mo is located on the Ni surface, and as the amount of Mo present on the Ni surface is higher, it may exhibit higher catalytic activity when used as the reduction catalyst in the anion exchange membrane water electrolysis system. However, in the case of NiMo-based alloy prepared by traditional plating or deposition methods, the surface area is small due to the large Ni particle size, and as a result, the amount of Mo present on the Ni surface is low. In contrast, since the alloy particles of the present invention prepared by the above-described preparation method have a smaller Ni particle size than those traditionally prepared, the specific surface area of Ni is relatively large, and as a result, much more Mo may be present on the surface. Accordingly, when Mo loss occurs due to subsequent contact with the aqueous alkaline solution, the surface area of Ni may become wider, and as a result, better catalytic activity may be exhibited.

On the other hand, the binder which may be used in preparing the slurry for forming the preliminary reduction electrode may include polytetrafluoroethylene (PTFE), perfluorosulfonic acid (PFSA), anion exchange resins, or cation exchange resins, and any one thereof or a mixture of two or more thereof may be used.

The binder may be used in an amount of 20 parts by weight to 50 parts by weight, based on 100 parts by weight of NiMo-based alloy particles.

In addition, the solvent used in preparing the slurry for forming the preliminary reduction electrode may include water; or alcohol-based solvents such as isopropyl alcohol, propyl alcohol, and ethanol, etc.

The slurry for forming the preliminary reduction electrode described above is applied onto a release film, dried, and separated to manufacture the preliminary reduction electrode. The preliminary reduction electrode used in the water electrolysis system of the present invention consists of only a catalyst layer containing NiMo-based alloy particles, and generally does not include an electrode substrate to support the catalyst layer.

Meanwhile, the oxidation electrode includes the oxidation catalyst as described above.

The oxidization electrode may be manufactured using a common method of manufacturing the oxidization electrode. Specifically, as in the reduction electrode, the oxidization electrode may be manufactured by a manufacturing method including the steps of preparing a slurry for forming the oxidization electrode by mixing the oxidation catalyst with a binder and a solvent, applying the slurry for forming the oxidization electrode containing the oxidation catalyst, the binder, and the solvent onto a release film, drying the slurry, and then separating the same from the release film, or by a manufacturing method including the step of applying, plating, or depositing the oxidation catalyst on the electrode substrate.

Next, the step 2 is a step of manufacturing the preliminary membrane-electrode assembly by interposing the anion exchange membrane between the preliminary reduction electrode and the oxidization electrode manufactured in the step 1.

Specifically, the preliminary membrane-electrode assembly may be manufactured by bringing the anion exchange membrane into contact with the catalyst layer of each electrode, interposing the anion exchange membrane between the oxidization electrode and the preliminary reduction electrode, and then bonding them by applying heat and pressure. At this time, the bonding process by heat and pressure may be performed by common methods.

In addition, when the preliminary membrane-electrode assembly to be manufactured further includes a gasket, a step of bonding the gasket to the manufactured assembly may be further performed after the boding process by heat and pressure.

Meanwhile, the release film used in manufacturing the oxidization electrode and the preliminary reduction electrode may be separated after completing the bonding process.

Meanwhile, the anion exchange membrane is the same as described above.

Further, when the anion exchange membrane water electrolysis system includes a plurality of membrane-electrode assemblies, the step of manufacturing a stack by repeating the process of manufacturing the membrane-electrode assembly twice or more, and then stacking the plurality of membrane-electrode assemblies and bonding the same by applying a pressure may be further included.

Further, when the stack further includes a porous transport layer and a separator along with the membrane-electrode assembly, the step of manufacturing the stack by sequentially placing the porous transport layer and the separator on the electrode side that is not in contact with the anion exchange membrane in the membrane-electrode assembly and then bonding the same by applying a pressure may be further included.

Next, the step 3 is a step of activating by feeding the aqueous alkaline solution into the preliminary membrane-electrode assembly manufactured in the step 2.

The aqueous alkaline solution may be fed to at least any one of the preliminary reduction electrode and the oxidization electrode of the preliminary membrane-electrode assembly.

As previously described, the aqueous alkaline solution may be fed by the alkaline circulation device which is connected to the preliminary membrane-electrode assembly. Accordingly, the manufacturing method according to the present invention may further include the step of connecting the alkaline circulation device to the preliminary membrane-electrode assembly after the step of manufacturing the preliminary membrane-electrode assembly in the step 2.

For example, after the step of manufacturing the preliminary membrane-electrode assembly, a step of connecting the aqueous alkaline solution circulation device to the oxidization electrode of the preliminary membrane-electrode assembly may be further included, wherein the aqueous alkaline solution may be fed from the aqueous alkaline solution circulation device to the oxidization electrode of the preliminary membrane-electrode assembly.

For another example, after manufacturing the preliminary membrane-electrode assembly, a step of connecting the aqueous alkaline solution circulation device for the preliminary reduction electrode and the alkaline circulation device for the oxidization electrode to the preliminary reduction electrode and the oxidization electrode of the preliminary membrane-electrode assembly, respectively, may be further included, wherein the aqueous alkaline solution may be fed from the aqueous alkaline solution circulation device for the preliminary reduction electrode and the alkaline circulation device for the oxidization electrode to the preliminary reduction electrode and the oxidization electrode of the preliminary membrane-electrode assembly, respectively.

For still another example, after manufacturing the preliminary membrane-electrode assembly, a step of installing the alkaline circulation device to be connected to both the preliminary reduction electrode and the oxidization electrode of the preliminary membrane-electrode assembly may be further included, wherein the aqueous alkaline solution may be fed from the alkaline circulation device to the preliminary reduction electrode and the oxidization electrode of the preliminary membrane-electrode assembly.

In the present invention, since the preliminary reduction electrode becomes a reduction electrode after activation, the aqueous alkaline solution circulation device for the preliminary reduction electrode, which is connected to the preliminary reduction electrode, is called an alkaline circulation device for the reduction electrode after activation.

The aqueous alkaline solution is as described above, and may be more specifically an aqueous potassium hydroxide solution at a concentration of 0.1 M to 1 M.

Through the activation process, the molar ratio of Ni and Mo in the NiMo-based alloy particles and the oxidation number of Mo are changed, and the activation conditions, specifically, current and time, during the activation process influence the performance development mechanism of NiMo-based alloy described above. Accordingly, in the present invention, the composition of NiMo alloy that exhibits excellent performance was identified, and activation conditions capable of realizing such alloy composition were found and optimized.

Specifically, the activation may be performed by applying a current at a current density of 25 mA/cm² to 200 mA/cm² and maintaining the same at 50°C to 60°C for 90 minutes to 360 minutes, and more specifically, performed by applying a current at a current density of 50 mA/cm² to 100 mA/cm² and maintaining the same at 50°C to 60°C for 300 minutes to 360 minutes.

When activation is performed under the above conditions, a NiMo-based alloy catalyst that satisfies the molar ratio and oxidation number requirements described above is prepared, and as a result, excellent water electrolysis performance may be achieved.

Specifically, although the molar ratio of Ni and Mo in the NiMo-based alloy particles before activation is 1:1 to 6:1 (Ni:Mo), the molar ratio of Ni and Mo in the NiMo-based alloy catalyst after activation becomes 6:1 to 101:1 due to loss of Mo during activation.

Further, although the oxidation number of Mo in the NiMo-based alloy particles before activation is 4+, 5+, or 6+, it becomes 5+ or 6+ after activation. This is because the oxidation number of Mo changed during activation through the mechanism described above.

Further, due to loss of Mo during activation, a Ni layer composed of Ni is formed on the surface of the alloy catalyst after activation and on the surface of the reduction electrode including the same.

Further, the manufacturing method of the present invention may further include a step of examining cell performance to examine the performance of the anion exchange membrane water electrolysis system after the activation.

Specifically, the step of examining the cell performance may be performed by a method of measuring the current density for each range by maintaining from 1.45 V to 1.9 V in 0.05V increments for 10 seconds.

The step of examining the cell performance is intended to examine the performance of the anion exchange membrane water electrolysis system, and does not affect the activation results and cell performance.

The anion exchange membrane water electrolysis system manufactured by the above manufacturing method exhibits improved durability and efficiency along with excellent water electrolysis performance.

According to still another embodiment of the present invention, provided is an activation method capable of improving the performance of the anion exchange membrane water electrolysis system.

Specifically, the method of activating the anion exchange membrane water electrolysis system includes the step of activating the preliminary reduction electrode by feeding the aqueous alkaline solution into the preliminary anion exchange membrane water electrolysis system including the preliminary reduction electrode, the oxidization electrode, and the anion exchange membrane interposed between the preliminary reduction electrode and the oxidization electrode, wherein the preliminary reduction electrode includes NiMo-based alloy particles in which a molar ratio of Ni and Mo is 1:1 to 6:1 and the oxidation number of Mo is 4+, 5+, or 6+, applying a current at a current density of 25 mA/cm² to 200 mA/cm², and maintaining the same at 50°C to 60°C for 90 minutes to 360 minutes.

Details of the preliminary anion exchange membrane water electrolysis system, the aqueous alkaline solution, and the feeding method thereof, and the activation process are as previously described.

Further, as a result of activating the preliminary reduction electrode, the reduction electrode is manufactured, and the reduction electrode includes the NiMo-based alloy catalyst in which the molar ratio of Ni and Mo is 6:1 to 101:1 and the oxidation number of Mo is 5+ or 6+.

Hereinafter, preferred exemplary embodiments are provided for better understanding of the present invention. However, the following exemplary embodiments are only for illustrating the present invention, and the present invention is not limited thereto.

### <Preparation of NiMo-based alloy particles>

### Preparation Example 1

A first solution was prepared by dissolving NiCl₂·6H₂O and MoCl₅ in 20 ml of DI water to a total content of 15 mmol. At this time, NiCl₂·6H₂O and MoCl₅ were used such that the molar ratio of Ni:Mo was 1:1.

Separately, a second solution was prepared by dissolving 34.2 mmol of NaOH solution and 10.7 mmol of Na₂CO₃ in 20 ml of DI water.
40 ml of DI water was placed in a vial, and the first and second solutions were added dropwise and mixed while stirring. The mixing was performed at room temperature (23±2°C), and pH of the mixed solution was maintained below 8.5.

The mixed solution was allowed to react with stirring for 24 hours, and the resulting metal precipitate was obtained by centrifugation. The obtained metal precipitate was washed three times with water and ethanol, and dried in a convection oven at 50°C overnight.

300 mg of the resulting dry material was reduced in a 10% H₂/N₂ atmosphere at 400°C for 1 hour to prepare NiMo alloy particles.

### Preparation Example 2

Ni₃Mo alloy particles were prepared in the same manner as in Preparation Example 1, except that NiCl₂·6H₂O and MoCl₅ were used such that the molar ratio of Ni:Mo was 3:1, when preparing the first solution in Preparation Example 1.

### Preparation Example 3

Ni₄Mo alloy particles were prepared in the same manner as in Preparation Example 1, except that NiCl₂·6H₂O and MoCl₅ were used such that the molar ratio of Ni:Mo was 4:1, when preparing the first solution in Preparation Example 1.

### Preparation Example 4

Ni₆Mo alloy particles were prepared in the same manner as in Preparation Example 1, except that NiCl₂·6H₂O and MoCl₅ were used such that the molar ratio of Ni:Mo was 6:1, when preparing the first solution in Preparation Example 1.

### <Manufacture of water electrolysis system>

### Example 1

An anion exchange membrane water electrolysis system was manufactured using the NiMo alloy particles prepared in Preparation Example 1.

In detail, it was manufactured in the following order: the step of manufacturing electrodes, the step of manufacturing a membrane-electrode assembly, the step of configuring a KOH solution feeding system, and the step of activation.

### Step of manufacturing electrodes

The NiMo alloy particles prepared in Preparation Example 1 and a binder were dispersed in a solvent, ultrasonic waves were applied for 30 minutes, and then dispersed using a ball mill to prepare a slurry for forming a preliminary reduction electrode. At this time, NiMo alloy particles and the binder were used at a weight ratio of 1:0.2, and 60% by weight of an aqueous polytetrafluoroethylene (PTFE) dispersion was used as the binder. In addition, a mixed solvent in which water and isopropyl alcohol (IPA) were mixed at a weight ratio of 5:5 was used as the solvent, and the solvent was used such that the solid content in the slurry for forming a preliminary reduction electrode was 20% by weight.

The slurry for forming a preliminary reduction electrode prepared above was applied to a release film using a bar coater such that the loading amount of NiMo after drying was 1.0 mg/cm² or more, and dried in a convection oven at 80°C for 1 hour to manufacture a preliminary reduction electrode. Through XRF analysis, it was confirmed that the loading amount of NiMo was 1.0 mg/cm² or more.

Separately, an oxidization electrode was manufactured in the same manner as above except for using NiFe-layered double hydroxide (NiFe LDH) as a catalyst.

### Step of manufacturing membrane-electrode assembly

The assembly was manufactured by bonding the electrodes to an anion exchange membrane using a catalyst coated membrane (CCM) method.

The preliminary reduction electrode and the oxidization electrode manufactured in the step of manufacturing electrodes were cut into 3 cm wide and 3 cm long, and then Sustainion's Sustainion^{™} X37-50 grade RT anion exchange membrane was interposed between the preliminary reduction electrode and the oxidization electrode, and roll-pressed at 130°C and a pressure of 30 MPa, and a speed of 0.1 m/min to manufacture a preliminary membrane-electrode assembly. Thereafter, the release film was removed from the preliminary reduction electrode and the oxidization electrode. For the manufactured preliminary membrane-electrode assembly, a sub-gasket with a thickness of 200 µm was attached to prevent cell leakage and to facilitate handling.

### Step of activation

A lower end plate made of Steel Use Stainless (SUS) was prepared, and a separator for the oxidization electrode made of Ni, a nickel foam with a thickness of 300 µm as a porous transport layer (PTL) for the oxidization electrode, and the preliminary-membrane electrode assembly manufactured above were stacked thereon such that the oxidization electrode was come into contact with the porous transport layer. Carbon paper with a thickness of 250 µm as a porous transport layer for the reduction electrode, a separator for the reduction electrode made of Ni, and an upper end plate made of SUS were sequentially placed at the reduction electrode side of the preliminary-membrane electrode assembly, and fastened by applying a pressure of 7 Nm torque to manufacture a stack.

Two KOH tanks were prepared as aqueous alkaline solution circulation devices, and each connected to the oxidization electrode and the reduction electrode of the stack to manufacture a dual feeding-type preliminary anion exchange membrane water electrolysis system in which KOH is fed to the oxidization electrode and the reduction electrode, respectively. At this time, 1 M KOH aqueous solution was used as the aqueous alkaline solution.

For the manufactured preliminary anion exchange membrane water electrolysis system, KOH was fed through dual feeding. The temperature of the aqueous KOH solution was 50°C and circulated at 10 cc/min. When the preliminary anion exchange membrane water electrolysis system reached 50°C, it was activated by applying a current density of 50 mA/cm² to the preliminary anion exchange membrane water electrolysis system for 6 hours using a power supply, and then cell performance was examined by a method of measuring the current density in each range while maintaining from 1.45 V to 1.9 V in 0.05V increments for 10 seconds, and the anion exchange membrane water electrolysis system was manufactured.

### Examples 2 to 4

Each anion exchange membrane water electrolysis system was manufactured in the same manner as in Example 1, except that the alloy particles prepared in Preparation Examples 2 to 4 were used as alloy particles.

### Experimental Example 1

For the alloy particles prepared in Preparation Examples 1 to 4, the BET specific surface area, average pore size, and average pore volume were measured in the following manner.

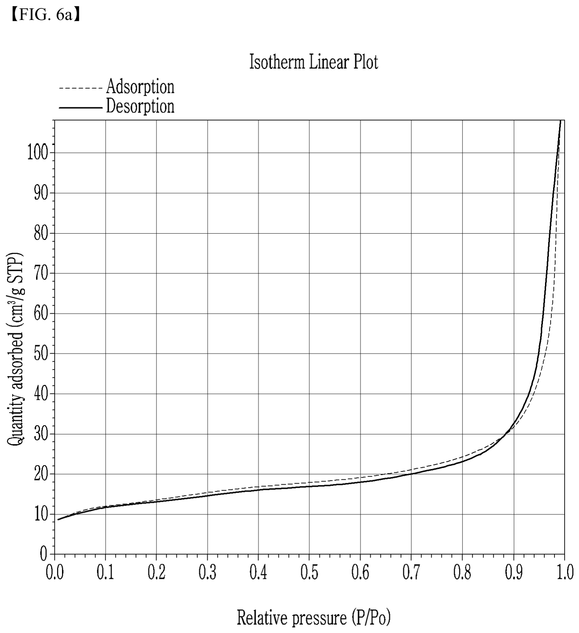

According to the Brunauer-Emmett-Teller (BET) method, nitrogen gas was adsorbed onto the alloy particles prepared in Preparation Examples 1 to 4 under the liquid nitrogen temperature (77 K) using Micromeritics Tristar II 3020, and then the amount of adsorbed nitrogen gas was measured, and the specific surface area, pore volume, and pore size were calculated. The measurement results are shown in Table 1 below and FIGS. 6A to 6D.

FIGS. 6A to 6D are graphs showing the results of BET analysis for NiMo-based alloy particles of Preparation Examples 1, 2, 3 and 4, respectively.

**[Table 1]**

| | Composition of NiMo alloy particle | BET specific surface area [m²/g] | Pore volume [cm³/g] | Pore size [nm] |
|---|---|---|---|---|
| Preparation Example 1 | NiMo | 38.131 | 0.149 | 15.731 |
| Preparation Example 2 | Ni₃Mo | 65.495 | 0.159 | 9.724 |
| Preparation Example 3 | Ni₄Mo | 56.675 | 0.197 | 13.923 |
| Preparation Example 4 | Ni₆Mo | 37.652 | 0.149 | 15.731 |

As a result of the experiment, the NiMo-based alloy particles prepared in Preparation Examples 1 to 4 had a BET specific surface area of 37 m²/g to 66 m²/g and a pore size of 9 nm to 16 nm, indicating that they had the increased pore size and pore volume along with the wide BET specific surface area, as compared to those of alloys prepared by traditional deposition or plating methods.

### Experimental Example 2

Linear sweep voltammetry (LSV) was used to evaluate changes in the activity for hydrogen evolution reaction according to the molar ratio of Ni and Mo in NiMo-based alloy.

LSV was performed in a 3-electrode cell using CH Instruments' CHE760E Bipotentiostat.

A catalyst slurry for a working electrode was prepared by mixing 10 mg of NiMo-based alloy particles, 1 ml of deionized water, 1.5 ml of 2-propanol, and 60 µl of 5% by weight of Nafion solution. At this time, the alloy particles prepared in Preparation Examples 1 to 4 were used as the NiMo-based alloy. 10 µl of the prepared catalyst slurry was loaded in an amount of 0.2 mg/cm² on a glassy carbon rotating disk electrode (RDE), and LSV was measured with a reversible hydrogen electrode (RHE) of 0.15 V to -0.3 V in 1 M KOH solution.

In addition, for comparison, changes in the activity for the hydrogen evolution reaction were evaluated in the same manner as above, except that the loading amount was changed to 0.04 mg/cm² and 0.2 mg/cm² for 40wt% Pt/C, which is traditionally used as a catalyst for oxidization electrodes, respectively.

In addition, through x-ray photoelectron spectroscopy (XPS), the initial oxidation number of Mo in the NiMo-based alloys of Preparation Examples 1 to 4 used in this Experimental Example was examined.

In detail, the composition of Ni₃Mo alloy particles in the preliminary anion exchange membrane water electrolysis system and the composition of the electrode surface in the anion exchange membrane water electrolysis system were determined using Thermo Fisher Scientific's Thermo Scientific K-alpha as x-ray photoelectron spectrometer. To correct the binding energy, it was set to 284.6 eV, based on the C 1s peak.

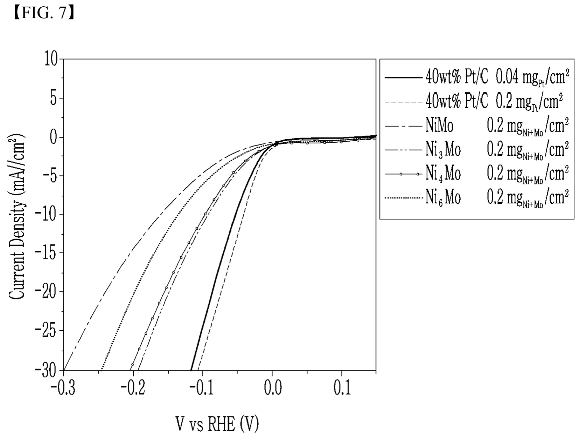

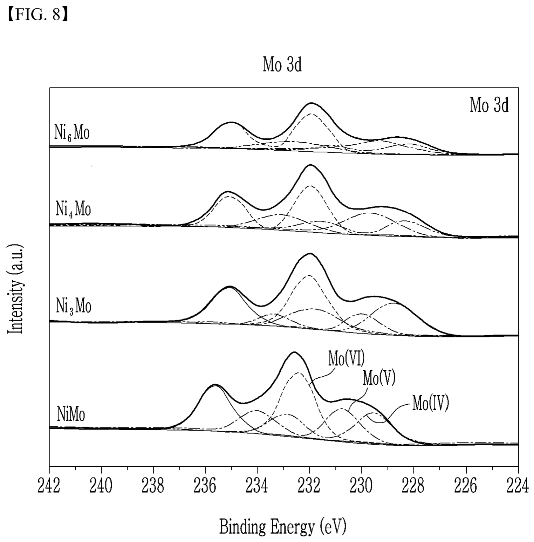

The measurement results are shown in FIGS. 7 and 8.

FIG. 7 is a graph showing the results of linear sweep voltammetry (LSV) to evaluate changes in the activity for the hydrogen evolution reaction according to a molar ratio of Ni and Mo in NiMo-based alloy, and FIG. 8 is a graph showing the results of XPS to analyze the initial oxidation number of Mo in NiMo-based alloys of Preparation Examples 1 to 4.

As a result of the experiment, it was confirmed that NiMo-based alloy particles showed the best catalytic activity when the ratio of Ni and Mo was 3:1 to 4:1, and at this time, the oxidation number of Mo was 4+, 5+, and 6+.

### Experimental Example 3

To examine the loss of Mo in the NiMo-based alloy in an alkaline environment, an anion exchange membrane water electrolysis system was manufactured using the Ni₃Mo alloy particles prepared in Preparation Example 2, and changes in the molar ratio of Ni and Mo in the alloy before and after activation were evaluated.

In detail, 10 preliminary anion exchange membrane water electrolysis systems were manufactured in the same manner as in Example 1, except that the Ni₃Mo alloy particles prepared in Preparation Example 2 were used as NiMo-based alloy particles (Sample Nos. 1 to 10). The content of NiMo in the manufactured preliminary anion exchange membrane water electrolysis systems and the contents of Ni and Mo in the alloy were measured, respectively.

Each preliminary anion exchange membrane water electrolysis system manufactured above was activated by circulating a 1M KOH solution at 50°C and maintaining a current of 25 mA/cm² for 6 hours, and then cell performance was examined by a method of measuring the current density in each range by maintaining 1.45 V to 1.9 V in 0.05 V increments for 10 seconds using a power supply, and each anion exchange membrane water electrolysis system was manufactured.

For the manufactured anion exchange membrane water electrolysis systems, the content of NiMo alloy catalyst and the contents of Ni and Mo in the alloy were measured.

The content of NiMo and the contents of Ni and Mo in the alloy were measured through X-ray fluorescence spectrometry (XRF).

In detail, Olympus VANTA S was used as the XRF equipment, and for elemental analysis, X-rays of 0 keV to 40 keV were irradiated, and the peaks that appeared at this time were analyzed to identify the material. Further, the X-ray irradiation time was maintained for 10 seconds, and a calibration curve for the peak that appeared at this time was drawn and the content was analyzed. Each calibration curve utilized a software built in the XRF equipment.

The results are shown in Table 2 below.

**[Table 2]**

| Sample No. | Content of alloy particles before activation (mg/cm²) | Content of alloy catalyst after activation (mg/cm²) | Molar ratio of Ni:Mo in alloy catalyst after activation |
|---|---|---|---|
| 1 | 2.02 (Ni: 1.42, Mo: 0.60) | 1.59 (Ni: 1.30, Mo: 0.29) | 7.3:1 |
| 2 | 2.02 (Ni: 1.65, Mo: 0.37) | 1.54 (Ni: 1.43, Mo: 0.11) | 21.3:1 |
| 3 | 1.42 (Ni: 1.21, Mo: 0.21) | 1.10 (Ni: 1.03, Mo: 0.07) | 24.1:1 |
| 4 | 1.56 (Ni: 1.31, Mo: 0.24) | 1.28 (Ni: 1.18, Mo: 0.10) | 19.3:1 |
| 5 | 2.16 (Ni: 1.87, Mo: 0.29) | 1.77 (Ni: 1.69, Mo: 0.08) | 34.5:1 |
| 6 | 1.52 (Ni: 1.32, Mo: 0.20) | 1.32 (Ni: 1.25, Mo: 0.07) | 29.2:1 |
| 7 | 2.37 (Ni: 1.68, Mo: 0.69) | 1.71 (Ni: 1.54, Mo: 0.17) | 14.8:1 |
| 8 | 2.73 (Ni: 1.20, Mo: 1.53) | 1.56 (Ni: 1.22, Mo: 0.34) | 5.9:1 |
| 9 | 0.68 (Ni: 0.51, Mo: 0.17) | 0.52 (Ni: 0.51, Mo: 0.01) | 83.4:1 |
| 10 | 1.92 (Ni: 1.34, Mo: 0.58) | 1.25 (Ni: 1.23, Mo: 0.02) | 100.5:1 |

As a result of the experiment, it was confirmed that there was a significant loss of Mo after activation. It was also confirmed that the molar ratio of Ni and Mo in NiMo-based alloy changed due to the loss.

Further, the reason for the loss of Mo was identified through thermodynamic calculations.

Table 3 below shows the loss energy of Mo in NiMo-based alloy catalyst.

**[Table 3]**

| Mo dissolution | E_{des} |
|---|---|
| Ni₂₄Mo₈ → Ni₂₄Mo₇ | -0.60 |
| Ni₂₄Mo₇ → Ni₂₄Mo₆ | -0.51 |
| Ni₂₄Mo₆ → Ni₂₄Mo₅ | -0.72 |
| Ni₂₄Mo₅ → Ni₂₄Mo₄ | -0.67 |

As shown in Table 3, when calculating the energy when Mo was lost one by one from Ni₂₄Mo₈ alloy, it can be seen that all progress is in the direction of stabilization, and through computational chemistry, it can be seen that NiMo-based alloy is stable when all Mo present on the surface is lost in an alkaline environment.

The adsorption energies of H₂O, MoO₂, and H₂O/MoO₂ clusters on the surface of Ni₂₄Mo₈ alloy were calculated, and the results showed that the lost Mo was adsorbed with water and existed in the form of H₂O/MoO₂.

In addition, the adsorption energy according to the adsorption site of the hydrogen intermediate H* was calculated, and it was found that the hydrogen intermediate was stabilized when adsorbed onto the Ni site rather than the Mo site. Therefore, it may be expected that clusters of MoO₂ and H₂O are adsorbed on the Ni surface, and after water electrolysis, hydrogen moves to the Ni surface to generate hydrogen.

From the above results, it can be seen that the hydrogen evolution reaction mechanism of Ni-Mo alloy in an alkaline environment is that all Mo on the surface of Ni-Mo alloy is lost, the lost Mo forms Mo oxide, and then re-adsorbed in the form of H₂O/Mo oxide onto the surface of bare Ni, and then a dissociation reaction of water and adsorption of the hydrogen intermediate H* onto the Ni site (dual active site) occur, and H₂ is generated through the Heyrovsky or Tafel reaction.

Accordingly, the NiMo alloy structure, which is stable and highly active in an alkaline environment, has a surface consisting of Ni because only the Mo on the surface is selectively dissolved, and the dissolved Mo forms a cluster with H₂O in the form of Mo oxide of MoO₂ and must be adsorbed onto the Ni surface, wherein the molar ratio of Ni and Mo was 6:1 to 101:1.

### Experimental Example 4

Changes in the oxidation number of Mo in NiMo-based alloy before and after activation were evaluated.

In detail, a preliminary anion exchange membrane water electrolysis system was manufactured in the same manner as in Example 1, except that the Ni₃Mo alloy particles prepared in Preparation Example 2 were used as NiMo-based alloy particles. The oxidation number of Mo of Ni₃Mo alloy particles in the manufactured preliminary anion exchange membrane water electrolysis system was measured.

The preliminary anion exchange membrane water electrolysis system manufactured above was activated by circulating a 1M KOH solution at 50°C and maintaining a current of 50 mA/cm² for 6 hours, and then cell performance was examined by a method of measuring the current density in each range by maintaining 1.45 V to 1.9 V in 0.05 V increments for 10 seconds using a power supply, and an anion exchange membrane water electrolysis system was manufactured. The oxidation number of Mo of the alloy catalyst in the manufactured anion exchange membrane water electrolysis system was measured.

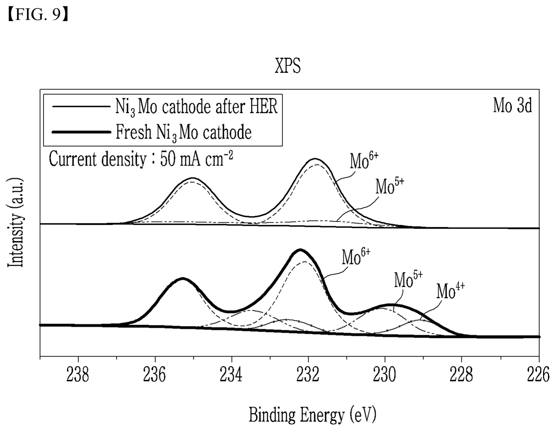

The oxidation number of Mo was measured through x-ray photoelectron spectroscopy (XPS), and the measurement method and conditions were as in Experimental Example 2. The results are shown in FIG. 9.

FIG. 9 is a graph showing the results of XPS to analyze the change in the oxidation number of Mo in Ni₃Mo alloy before and after activation.

As a result of the experiment, the oxidation number of Mo in Ni₃Mo alloy before activation were 4+, 5+, and 6+, but 5+ and 6+ after activation. From this, it was confirmed that changes in the oxidation number of Mo in NiMo-based alloy occur in an alkaline environment.

### Experimental Example 5

The effect of the activation method on the performance of the anion exchange membrane water electrolysis system was evaluated.

In detail, a preliminary anion exchange membrane water electrolysis system was manufactured in the same manner as in Example 1 except that the Ni₃Mo alloy particles prepared in Preparation Example 2 were used as NiMo-based alloy particles, and then while feeding an aqueous alkaline solution into the manufactured preliminary anion exchange membrane water electrolysis system, activation was performed by an activation method of increasing and decreasing the applied voltage as in the prior art (hereinafter, referred to as 'Comparative Example'), and an activation method of applying a current while maintaining a constant current density as in the present invention (hereinafter, referred to as 'Example').

### (1) Activation method 1 (Comparative Example A)

For the preliminary anion exchange membrane water electrolysis system manufactured above, 1M KOH solution was circulated at 60°C, the voltage was increased from 1.45 V to 1.9V in 0.05 V increments while holding for 5 seconds, and then the voltage was decreased from 1.9 V to 1.45 V in 0.05 V increments while holding for 5 seconds. At this time, to maintain the current density, the number of activations through rising and falling of the voltage was fixed to 20 cycles.

### (2) Activation method 2 (Example A)

Activation of the preliminary anion exchange membrane water electrolysis system manufactured above was performed by maintaining a current of 100 mA/cm² for 6 hours while circulating a 1M KOH solution at 60°C.

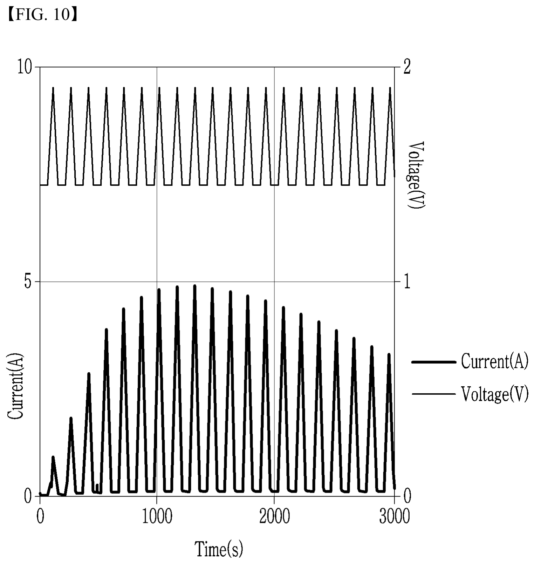

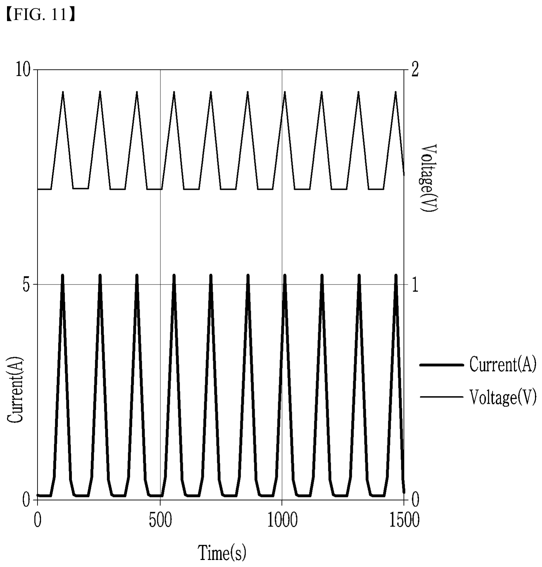

After completing the activation using the above method, cell performance of each anion exchange membrane water electrolysis system was examined by a method of measuring the current density of each range by maintaining from 1.45 V to 1.9 V in 0.05 V increments for 10 seconds using a power supply. While examining the cell performance, the amount of current change according to voltage control was observed, and the results are shown in FIGS. 10 and 11.

FIG. 10 is a graph showing the results of observing the amount of current change according to voltage control in the anion exchange membrane water electrolysis system (Comparative Example A) activated by the method of increasing and decreasing the voltage to be applied, and FIG. 11 is a graph showing the results of observing the amount of current change according to voltage control in the anion exchange membrane water electrolysis system (Example A) activated by the method of applying the current at a predetermined current density and maintaining the same for a predetermined time.

As a result of the experiment, the traditional activation method (Comparative Example A) of increasing and decreasing the voltage to be applied accelerated the loss of Mo when the voltage was changed, and as a result, the water electrolysis performance sharply decreased. In contrast, the activation method (Example A) of applying the current at a current density of 100mA/cm² and maintaining the same for 6 hours, Mo was lost at the beginning of activation and re-deposited on the Ni surface, and thus it was confirmed that performance remained constant without changes even though the voltage change was repeated 10 times or more.

### Experimental Example 6

The effect of the activation method of the anion exchange membrane water electrolysis system on the amount of Mo loss was evaluated.

### (1) Activation method 1 (Comparative Example B)

A preliminary anion exchange membrane water electrolysis system was manufactured in the same manner as in Example 1, except that the Ni₃Mo alloy particles prepared in Preparation Example 2 were used as the NiMo-based alloy particles. Then, for the manufactured preliminary anion exchange membrane water electrolysis system, 1M KOH solution was circulated at 60°C, the voltage was increased from 1.45 V to 1.9V in 0.05 V increments while holding for 5 seconds, and then the voltage was decreased from 1.9 V to 1.45 V in 0.05 V increments while holding for 5 seconds. At this time, to maintain the current density, the cycle was fixed.

Then, after the activation, cell performance of each anion exchange membrane water electrolysis system was examined by a method of measuring the current density of each range by maintaining from 1.45 V to 1.9 V in 0.05 V increments for 10 seconds using a power supply, and an anion exchange membrane water electrolysis system was manufactured.

### (2) Activation method 2 (Example B)

A preliminary anion exchange membrane water electrolysis system was manufactured in the same manner as in Example 1, except that the Ni₃Mo alloy particles prepared in Preparation Example 2 were used as the NiMo-based alloy particles. Then, activation of the manufactured preliminary anion exchange membrane water electrolysis system was performed by circulating 1M KOH solution at 60° and maintaining the current of 50 mA/cm² for 6 hours. Then, cell performance was examined by a method of measuring the current density of each range by maintaining from 1.45 V to 1.9 V in 0.05 V increments for 10 seconds using a power supply, and an anion exchange membrane water electrolysis system was manufactured.

The content of NiMo alloy and the content of Mo in the preliminary anion exchange membrane water electrolysis system before activation, and the content of NiMo alloy and the content of Mo remaining in the electrode of the anion exchange membrane water electrolysis system after activation were determined using X-ray fluorescence spectrometry (XRF), respectively.

At this time, the X-ray fluorescence spectrometry (XRF) and the measurement of contents were performed in the same manner as in Experimental Example 3.

As a result of the experiment, the initial content of Mo in the NiMo alloy before activation was 0.75 mg/cm² (catalyst reaction area of 5 cm²), and when activated using the activation method 1 (Comparative Example B), the content of Mo after activation was 0.07 mg/cm², indicating that about 9% remained. In contrast, when activated using the activation method 2 (Example B), the initial content of Mo was 0.75 mg/cm², and after activation, 0.18 mg/cm², indicating that about 24% remained.

From this, it was confirmed that the activation method of the present invention is more advantageous in reducing the amount of Mo loss, and as a result, may improve the lifespan characteristics of the water electrolysis system.

### Experimental Example 7

To evaluate the effect of current conditions during activation on the performance development mechanism of NiMo-based alloy, activation was performed by changing the current density to 25 mA/cm², 50 mA/cm², 100 mA/cm² and 200 mA/cm², respectively, and performance was evaluated.

In detail, a preliminary anion exchange membrane water electrolysis system was manufactured in the same manner as in Example 1, except that the Ni₃Mo alloy particles of Preparation Example 2 were used. The manufactured preliminary anion exchange membrane water electrolysis system was activated by applying the current for 6 hours under the current density conditions of 25 mA/cm², 50 mA/cm², 100 mA/cm² and 200 mA/cm² while circulating 1 M KOH solution at 50°C. Thereafter, cell performance was examined by a method of measuring the current density in each range by maintaining from 1.45 V to 2.5 V in 0.05 V increments for 10 seconds using a power supply, and an anion exchange membrane water electrolysis system was manufactured.

For comparison, a preliminary anion exchange membrane water electrolysis system was manufactured using 40wt Pt/C catalyst as a catalyst for reduction electrode in the same manner as in Example 1. The manufactured preliminary anion exchange membrane water electrolysis system was activated by circulating 1 M KOH solution at 50°C, increasing the voltage from 1.45 V to 1.9 V in 0.05 V increments while holding for 5 seconds, and then decreasing the voltage from 1.9 V to 1.45 V in 0.05 V increments while holding for 5 seconds. At this time, the cycle was fixed to maintain the current density. Thereafter, cell performance was examined in the same manner as above, and an anion exchange membrane water electrolysis system was manufactured.

For the anion exchange membrane water electrolysis system manufactured above, the voltage change according to current density was measured using linear sweep voltammetry (LSV), and as a result, a polarization curve was obtained.

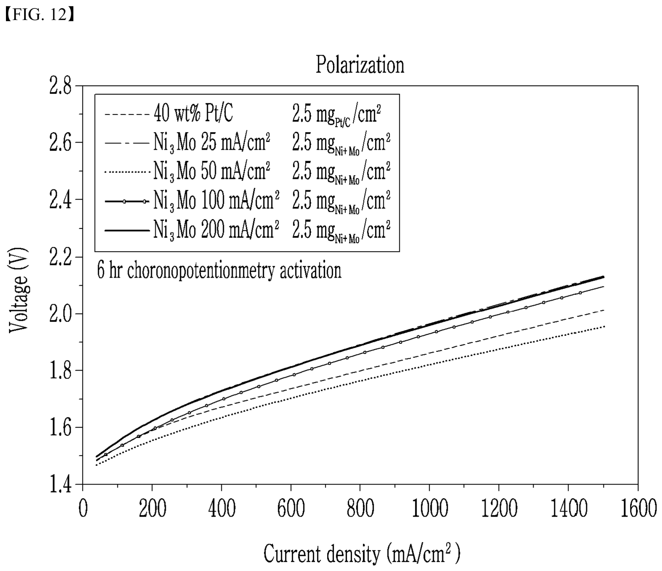

In detail, for each anion exchange membrane water electrolysis system manufactured above, the voltage change according to current density was measured under LSV conditions using CH Instruments' CHE760E Bipotentiostat device. The results are shown in FIG. 12.

Further, the durability of the anion exchange membrane water electrolysis system manufactured above was evaluated using chronoamperometry.

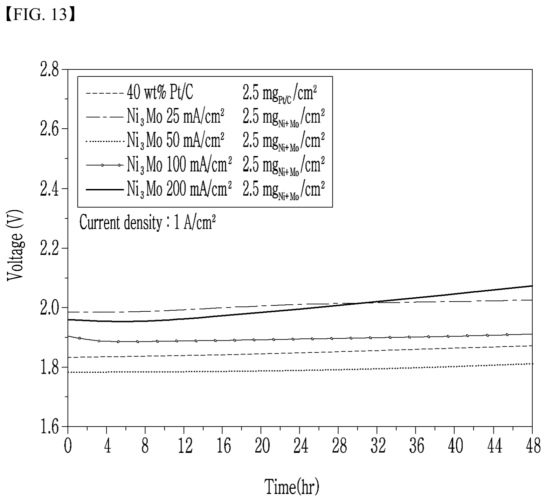

In detail, the voltage was measured while maintaining a current density of 1A/cm² using a power supply for each anion exchange membrane water electrolysis system manufactured above. When the voltage remained unchanged, durability was determined as excellent, and when the voltage increased, durability was determined as low. The results are shown in FIG. 13.

FIG. 12 is a graph showing the results of evaluating polarization for the anion exchange membrane water electrolysis system activated under current density conditions of 25 mA/cm², 50 mA/cm², 100 mA/cm², and 200 mA/cm², respectively, and FIG. 13 is a graph showing the results of evaluating durability for the anion exchange membrane water electrolysis system activated under current density conditions of 25 mA/cm², 50 mA/cm², 100 mA/cm², and 200 mA/cm², respectively.

As a result of the experiment, it was confirmed that when activated at a current density of 25 mA/cm² to 200 mA/cm², the system showed excellent performance characteristics, and particularly, when activated at a current density of 50 mA/cm², it showed better performance and durability than platinum.

Meanwhile, the reason for the above experimental results may be understood through the pourbaix diagram.

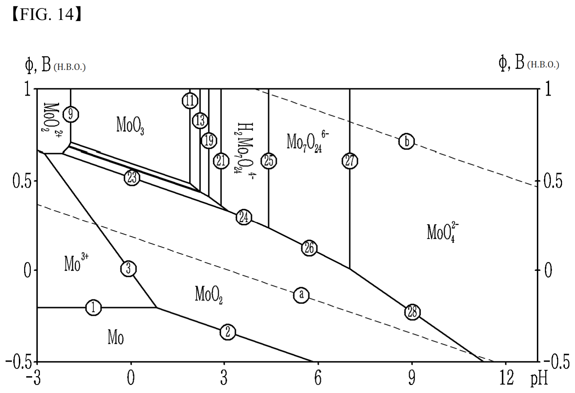

FIG. 14 is a diagram showing a state of Mo according to pH, disclosed in a reference "Anatolyevich, Pavel. "The Revised Pourbaix Diagram for Molybdenum." HMo 2.10: 3."

As shown in FIG. 14, it can be seen that Mo exists in the form of MoO₄²⁻ or MoO₂ in an alkaline environment and in a specific current range. Further, under conditions of pH 12 or higher, Mo is dissolved and lost in the form of MoO₄²⁻. However, as shown in line 26, Mo may exist in the form of MoO₂ in a specific voltage range between pH 9 and pH 12. This experiment and computational chemistry showed that Mo may exist in the form of MoO₂ when activated in a specific current range, and it is possible to predict that when activated at 50 mA/cm², Mo is highly likely to exist as MoO₂.

Additionally, the effect of current conditions during activation on Mo loss in NiMo-based alloy in an alkaline environment was evaluated.

For the anion exchange membrane water electrolysis system activated by changing the current density to 25 mA/cm², 50 mA/cm², 100 mA/cm² and 200 mA/cm², the remaining amount of Mo was determined through X-ray spectrometry (XRF) in the same manner as in Experimental Example 3.

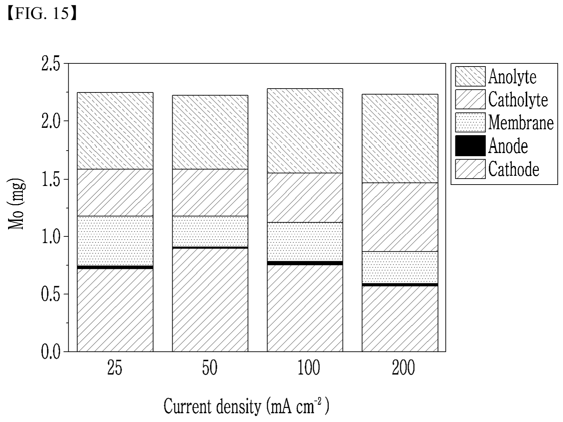

The results are shown in FIG. 15.

FIG. 15 is a graph showing the results of X-ray fluorescence spectrometry (XRF) to analyze the remaining amount of Mo in the anion exchange membrane water electrolysis system activated under current density conditions of 25 mA/cm², 50 mA/cm², 100 mA/cm², and 200 mA/cm², respectively.

As a result of the experiment, when activated at the current density of 50mA/cm², the largest amount of Mo remained in the cathode. From this, it can be predicted that Mo lost through activation is re-adsorbed to the Ni surface.

### Experimental Example 8

To evaluate the effect of the activation time on the performance development mechanism of NiMo-based alloy, activation was performed by changing the activation time to 90 minutes, 180 minutes, and 360 minutes, respectively, and cell performance was evaluated.

In detail, a preliminary anion exchange membrane water electrolysis system was manufactured in the same manner as in Example 1, except that Ni₃Mo alloy particles of Preparation Example 2 were used. The manufactured preliminary anion exchange membrane water electrolysis system was activated by applying the current at a current density of 50 mA/cm² for 90 minutes, 3 hours, and 6 hours while circulating 1 M KOH solution at 50°C. Then, cell performance was examined by a method of measuring the current density of each range by maintaining from 1.45 V to 1.9 V in 0.05 V increments for 10 seconds using a power supply, and an anion exchange membrane water electrolysis system was manufactured.

Further, for comparison, a preliminary anion exchange membrane water electrolysis system was manufactured using 40wt Pt/C catalyst as a catalyst for reduction electrode in the same manner as in Example 1. The manufactured preliminary anion exchange membrane water electrolysis system was activated by circulating 1 M KOH solution at 50°C, increasing the voltage from 1.45 V to 1.9 V in 0.05 V increments while holding for 5 seconds, and then decreasing the voltage from 1.9 V to 1.45 V in 0.05 V increments while holding for 5 seconds. At this time, the cycle was fixed to 10 cycles to maintain the current density. Thereafter, cell performance was examined by a method of measuring the current density of each range by maintaining from 1.45 V to 1.9 V in 0.05 V increments for 10 seconds using a power supply, and an anion exchange membrane water electrolysis system was manufactured.

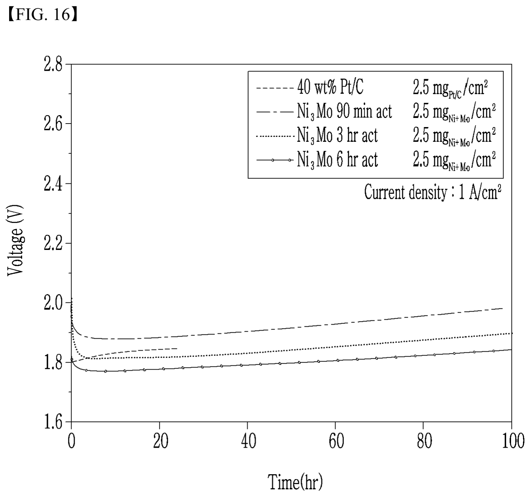

For the anion exchange membrane water electrolysis system manufactured above, the voltage value was measured by maintaining the condition of 1A/cm² using the chronoamperometry method. The results are shown in FIG. 16.

FIG. 16 is a graph showing the results of evaluating the effect of activation time on the performance development of NiMo-based alloy.

As a result of the experiment, when the activation time was 180 minutes or longer, performance higher than that of platinum was achieved, and when the activation time was 360 minutes or longer, it was stabilized.

### Experimental Example 9

Changes in the amount of Mo loss in an anion exchange membrane water electrolysis system according to the aqueous alkaline solution circulation method were evaluated.

The Ni₃Mo alloy particles prepared in Preparation Example 2 were used to manufacture a preliminary anion exchange membrane water electrolysis system including a both feeding-type aqueous alkaline solution circulation device as shown in FIG. 4, and a preliminary anion exchange membrane water electrolysis system including an anode feeding-type aqueous alkaline solution circulation device as shown in FIG. 5. The content of NiMo in the manufactured preliminary anion exchange membrane water electrolysis systems and the contents of Ni and Mo in the alloy were measured, respectively.

Subsequently, the preliminary anion exchange membrane water electrolysis system was activated by applying the current of 25 mA/cm² for 6 hours while circulating 1 M KOH solution at 60°C. Cell performance was examined by a method of measuring the current density of each range by maintaining from 1.45 V to 1.9 V in 0.05 V increments for 10 seconds using a power supply, and an anion exchange membrane water electrolysis system was manufactured. The content of NiMo alloy catalyst in the manufactured anion exchange membrane water electrolysis system and the contents of Ni and Mo in the alloy were measured.

The content of NiMo and the contents of Ni and Mo in the alloy were determined though X-ray fluorescence spectrometry (XRF) in the same manner as in Experimental Example 3. The results are shown in Table 4 below.

**[Table 4]**

| Sample No. | Feeding method of aqueous alkaline solution | Type of alloy | Content of alloy particles before activation (mg/cm²) | Content of alloy catalyst after activation (mg/cm²) |
|---|---|---|---|---|
| 11 | Anode (60°C) | Ni₃Mo | 2.02 (Ni: 1.42, Mo: 0.60) | 1.59 (Ni: 1.30, Mo: 0.29) |
| 12 | Both(60°C) | Ni₃Mo | 2.34 (Ni: 1.59 Mo: 0.75) | 1.60 (Ni: 1.53, Mo: 0.07) |

As a result of the experiment, the anode feeding method of feeding to only the oxidation electrode side showed a lower Mo loss rate than the both feeding method of feeding the KOH solution simultaneously.

In the case of the both feeding method, Mo dissolution, which occurs when the KOH solution comes into direct contact with the NiMo catalyst, and Mo dissolution, which is negatively ionized and moves to the anode, occur simultaneously. In contrast, the anode feeding shows a lower dissolution rate than the both feeding because the NiMo catalyst does not come into direct contact with KOH.

### Experimental Example 10

The effect of the aqueous alkaline solution circulation method in an anion exchange membrane water electrolysis system on the performance of the water electrolysis system was evaluated.

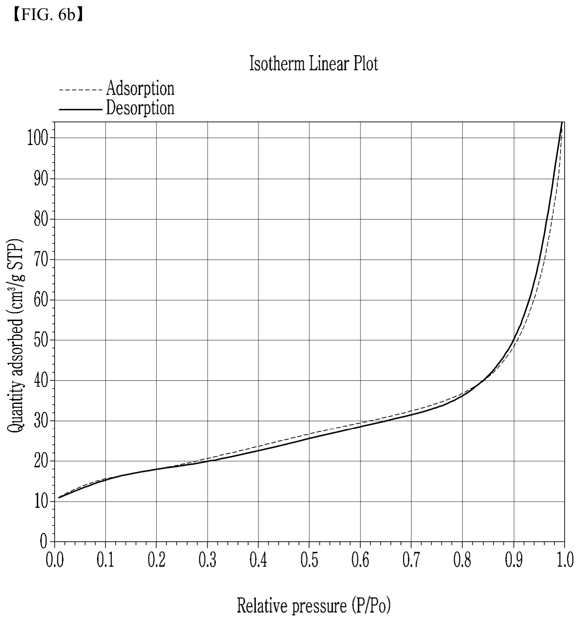

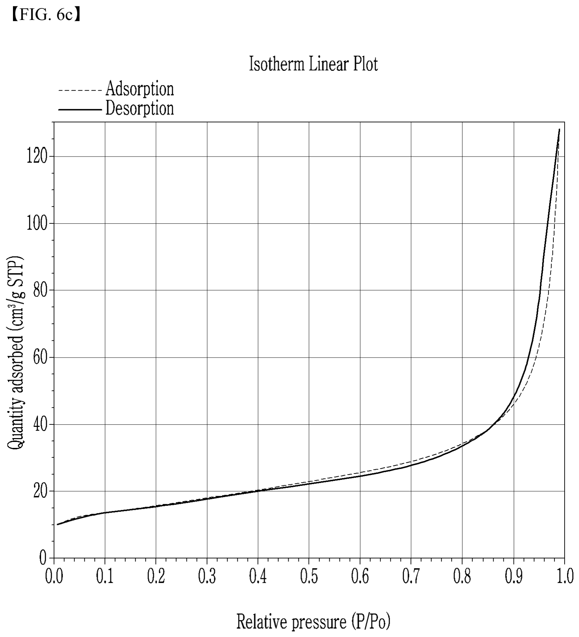

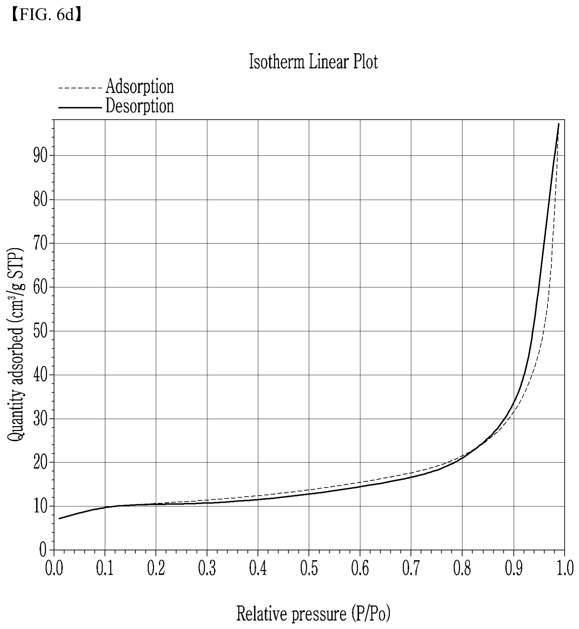

The Ni₃Mo alloy particles prepared in Preparation Example 2 were used to manufacture a preliminary anion exchange membrane water electrolysis system including a both feeding-type aqueous alkaline solution circulation device as shown in FIG. 4, and a preliminary anion exchange membrane water electrolysis system including a dual feeding-type aqueous alkaline solution circulation device as shown in FIG. 6.

Subsequently, the preliminary anion exchange membrane water electrolysis system was activated by applying the current of 25 mA/cm² for 6 hours while circulating 1 M KOH solution at 60°C. Cell performance was examined by a method of measuring the current density of each range by maintaining from 1.45 V to 1.9 V in 0.05 V increments for 10 seconds using a power supply, and anion exchange membrane water electrolysis systems were manufactured, respectively.

For each anion exchange membrane water electrolysis system manufactured above, the voltage change according to current density was measured by linear sweep voltammetry (LSV), and as a result, a polarization curve was obtained.

In detail, for each anion exchange membrane water electrolysis system manufactured above, the voltage change according to current density was measured under LSV conditions using a device (CHE760E Bipotentiostat manufactured by CH Instruments).

Further, the durability of the anion exchange membrane water electrolysis system manufactured above was evaluated using chronoamperometry.

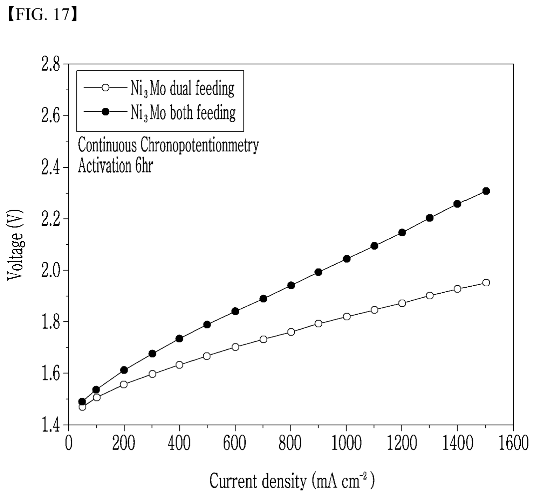

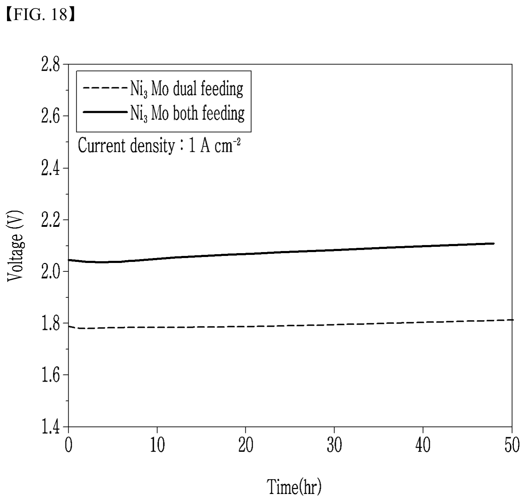

In detail, the voltage was measured while maintaining a current density of 1A/cm² using a power supply for each anion exchange membrane water electrolysis system manufactured above. When the voltage remained unchanged, durability was determined as excellent, and when the voltage increased, durability was determined as low. The results are shown in FIGS. 17 and 18.

FIG. 17 is a graph showing the results of evaluating polarization of the anion exchange membrane water electrolysis system according to the aqueous alkaline solution circulation method, and FIG. 18 is a graph showing the results of evaluating the durability of the anion exchange membrane water electrolysis system.

As a result of the experiment, as compared to the dual feeding method of using a single tank to feed the KOH aqueous solution, the both feeding method, which is configured separately, was able to produce hydrogen at a lower voltage. In other words, it was confirmed that when feeding of the KOH aqueous solution is configured separately for anode and cathode, system efficiency is higher.

## Claims

1. A method for preparing an anion exchange membrane water electrolysis system, the method comprising the steps of:
manufacturing a preliminary reduction electrode and an oxidization electrode, respectively;
manufacturing a preliminary membrane-electrode assembly by interposing an anion exchange membrane between the preliminary reduction electrode and the oxidization electrode; and
activating the preliminary reduction electrode by feeding an aqueous alkaline solution into the preliminary membrane-electrode assembly,
wherein the preliminary reduction electrode includes NiMo-based alloy particles in which a molar ratio of Ni and Mo is 1:1 to 6:1 and the oxidation number of Mo is 4+, 5+, or 6+, and
the activation is performed by applying a current at a current density of 25 mA/cm² to 200 mA/cm² and maintaining the same at 50°C to 60°C for 90 minutes to 360 minutes.

2. The method for preparing an anion exchange membrane water electrolysis system of claim 1, wherein the activation is performed by applying a current at a current density of 50 mA/cm² to 100 mA/cm² and maintaining the same at 50°C to 60°C for 300 minutes to 360 minutes.

3. The method for preparing an anion exchange membrane water electrolysis system of claim 1, wherein the aqueous alkaline solution is fed into any one of the preliminary reduction electrode and the oxidization electrode of the preliminary membrane-electrode assembly.

4. The method for preparing an anion exchange membrane water electrolysis system of claim 1, further comprising the step of connecting an aqueous alkaline solution circulation device to the oxidization electrode of the preliminary membrane-electrode assembly, after the step of manufacturing the preliminary membrane-electrode assembly,
wherein the aqueous alkaline solution is fed from the aqueous alkaline solution circulation device to the oxidization electrode of the preliminary membrane-electrode assembly.

5. The method for preparing an anion exchange membrane water electrolysis system of claim 1, further comprising the step of connecting an aqueous alkaline solution circulation device for the preliminary reduction electrode and an alkaline circulation device for the oxidization electrode to the preliminary reduction electrode and the oxidization electrode of the preliminary membrane-electrode assembly, respectively, after manufacturing the preliminary membrane-electrode assembly,
wherein the aqueous alkaline solution is fed from the aqueous alkaline solution circulation device for the preliminary reduction electrode and the alkaline circulation device for the oxidization electrode to the preliminary reduction electrode and the oxidization electrode of the preliminary membrane-electrode assembly, respectively.

6. The method for preparing an anion exchange membrane water electrolysis system of claim 1, further comprising the step of installing an alkaline circulation device to be connected to both the preliminary reduction electrode and the oxidization electrode of the preliminary membrane-electrode assembly, after manufacturing the preliminary membrane-electrode assembly,
wherein the aqueous alkaline solution is fed from the alkaline circulation device to the preliminary reduction electrode and the oxidization electrode of the preliminary membrane-electrode assembly.

7. The method for preparing an anion exchange membrane water electrolysis system of claim 1, wherein the aqueous alkaline solution is an aqueous potassium hydroxide solution at a concentration of 0.1 M to 1 M.

8. The method for preparing an anion exchange membrane water electrolysis system of claim 1, wherein the NiMo-based alloy particles have Ni and Mo at a molar ratio of 3:1 and the Mo oxidation number of 4+, 5+ or 6+.

9. The method for preparing an anion exchange membrane water electrolysis system of claim 1, wherein the NiMo-based alloy particles are prepared by a preparation method including the steps of co-precipitating a Ni precursor and a Mo precursor under alkaline conditions and then heat-treating the resulting product.

10. The method for preparing an anion exchange membrane water electrolysis system of claim 1, wherein the preliminary reduction electrode is manufactured by a manufacturing method including the step of applying a slurry for forming the preliminary reduction electrode onto a release film, the slurry including the NiMo-based alloy particles, a binder, and a solvent, drying the slurry, and then separating the dried slurry from the release film.

11. The method for preparing an anion exchange membrane water electrolysis system of claim 10, wherein the binder is one or more selected from the group consisting of polytetrafluoroethylene, perfluorosulfonic acid, anion exchange resins, and cation exchange resins.

12. The method for preparing an anion exchange membrane water electrolysis system of claim 1, wherein a reduction electrode is manufactured as a result of the activation, and
the reduction electrode comprises a NiMo-based alloy catalyst in which a molar ratio of Ni and Mo is 6:1 to 101:1 and the oxidation number of Mo is 5+ or 6+.

13. The method for preparing an anion exchange membrane water electrolysis system of claim 12, wherein the NiMo-based alloy catalyst comprises a Ni layer on the surface.

14. The method for preparing an anion exchange membrane water electrolysis system of claim 1, wherein the oxidization electrode is manufactured by a manufacturing method including the steps of applying a slurry for forming the oxidation electrode onto a release film, the slurry including an oxidation catalyst, a binder, and a solvent, drying the slurry, and then separating the dried slurry from the release film, or
by a manufacturing method including the step of applying, plating, or depositing the oxidation catalyst on an electrode substrate.

15. The method for preparing an anion exchange membrane water electrolysis system of claim 14, wherein the oxidation catalyst comprises one or more selected from the group consisting of Ni, NiCoFe, Ir, and NiFe-layered double hydroxide.

16. The method for preparing an anion exchange membrane water electrolysis system of claim 1, further comprising the step of examining cell performance by a method of measuring a current density for each range by maintaining from 1.45 V to 1.9 V in 0.05V increments for 10 seconds, after the activation.

17. An anion exchange membrane water electrolysis system manufactured by the manufacturing method of claim 1, the anion exchange membrane water electrolysis system comprising:
a reduction electrode including particulate NiMo-based alloy catalyst; an oxidization electrode; an anion exchange membrane interposed between the reduction electrode and the oxidization electrode; and an aqueous alkaline solution,
wherein the NiMo-based alloy catalyst includes Ni and Mo at a molar ratio of 6:1 to 101:1 and the oxidation number of Mo is 5+ or 6+.

18. The anion exchange membrane water electrolysis system of claim 17, further comprising an anode feeding-type aqueous alkaline solution circulation device which is connected to the oxidization electrode and supplies the aqueous alkaline solution to the oxidization electrode; a both feeding-type aqueous alkaline solution circulation device which is connected to both the oxidization electrode and the reduction electrode, and supplies the aqueous alkaline solution to both the oxidization electrode and the reduction electrode; or a dual feeding-type aqueous alkaline solution circulation device for the oxidization electrode consisting of an aqueous alkaline solution circulation device for the oxidization electrode and an aqueous alkaline solution circulation device for the reduction electrode, each connected to the oxidization electrode and the reduction electrode.

19. A method for activating an anion exchange membrane water electrolysis system, the method comprising the step of activating a preliminary reduction electrode by feeding an aqueous alkaline solution into a preliminary anion exchange membrane water electrolysis system including the preliminary reduction electrode, an oxidization electrode, and an anion exchange membrane interposed between the preliminary reduction electrode and the oxidization electrode, wherein the preliminary reduction electrode includes NiMo-based alloy particles in which a molar ratio of Ni and Mo is 1:1 to 6:1 and the oxidation number of Mo is 4+, 5+, or 6+, applying a current at a current density of 25 mA/cm² to 200 mA/cm², and maintaining the same at 50°C to 60°C for 90 minutes to 360 minutes.

20. The method for activating an anion exchange membrane water electrolysis system of claim 19, wherein a reduction electrode is manufactured as a result of the activation, and
the reduction electrode includes a NiMo-based alloy catalyst in which a molar ratio of Ni and Mo is 6:1 to 101:1 and the oxidation number of Mo is 5+ or 6+.
